# EUROPEAN PATENT APPLICATION

(11) **EP 4 586 450 A1**
(43) Date of publication of application: **16.07.2025**
(21) Application number: 23862963.8
(22) Date of filing: 24.08.2023
(51) Int. Cl.: H02J 7/00

(54) **POWER CONVERSION APPARATUS AND PROGRAM**

(30) Priority: 09.09.2022 JP 2022144023
(71) Applicant: DENSO CORPORATION, Kariya-city, Aichi 448-8661 (JP)
(72) Inventor: KURACHI, Taisuke, Kariya-city Aichi 448-8661 (JP); KUBO, Shunichi, Kariya-city Aichi 448-8661 (JP); KAZAOKA, Ryoya, Kariya-city Aichi 448-8661 (JP); TOYAMA, Keisuke, Kariya-city Aichi 448-8661 (JP); TAKASHIMA, Kaoru, Kariya-city Aichi 448-8661 (JP); KAGAMI, Yoshihiro, Kariya-city Aichi 448-8661 (JP)
(74) Representative: TBK
(86) International application number: PCT/JP2023/030616
(87) International publication number: WO 2024/053424

(57) **Abstract**

A power conversion device equipped with an inverter (20), a motor (10) including an armature winding (11), a storage-to-storage switch (40) provided in a storage-to-storage electrical path (24) that electrically connects a negative terminal of a first power storage unit (31) and a positive terminal of a second power storage unit (32), a bypass switch (50, 51), and a motor-side electrical path (25-28) that electrically connects the armature winding and the storage-to-storage electrical path, a first electrical device (80), and a second electrical device (90). The first electrical device is electrically connectable in parallel with a subject power storage unit that is either the first or second power storage unit. The second electrical device is electrically connectable with something other than the first electrical device.

## Description

### [Cross Reference to Related Application]

This application claims the benefit of priority from Japanese Patent Application No. 2022-144023 filed with the Japan Patent Office on September 9, 2022, the entire contents of which are incorporated herein by reference.

### [Technical Field]

The present disclosure relates to a power conversion apparatus and a program.

### [Background Art]

Conventionally, for example, as described in PTL 1, a power supply device is known that is capable of switching the connection state of two batteries between a series connection state and a parallel connection state. This power supply device includes a relay for switching the connection state of two batteries between the series connection state and the parallel connection state to an external charger.

### [Citation List]

### [Patent Literature]

[PTL 1] JP 2022-87465 A

### [Summary of the Invention]

In view of the foregoing, it is desired to have a power conversion device capable of switching the connection state of power storage units, such as batteries.

Amain objective of this disclosure is to provide a power conversion device and a program that are capable of switching a connection state of a first power storage unit and a second power storage unit.

One aspect of the present disclosure provides a power conversion device equipped with a high-side electrical path that is electrically connectable to a positive terminal of a first power storage unit, and a low-side electrical path that is electrically connectable to a negative terminal of a second power storage unit, an inverter including an upper-arm switch electrically connected to the high-side electrical path and a lower-arm switch electrically connected to the low-side electrical path, and a motor including an armature winding electrically connected to the connection point between the upper-arm switch and the lower-arm switch via a conductive member, the power conversion device comprising:
a storage-to-storage switch provided in a storage-to-storage electric path that electrically connects a negative terminal of the first power storage unit and a positive terminal of the second power storage unit;
a bypass switch that connects between negative terminals of the first and second storage units and/or between positive terminals of the first and second storage units;
motor-side electrical paths that electrically connect the armature winding or the conductive member with the storage-to-storage electrical path;
a first electrical device that is electrically connectable in parallel with a subject power storage unit, which is either the first power storage unit or the second power storage unit, or electrically connectable between the high-side electrical path and the low-side electrical path;
a second electrical device that is electrically connectable to a power storage unit, among the first power storage unit and the second power storage unit, other than the power storage unit to which the first electrical device is electrically connected, between the high-side electrical path and the low-side electrical path.

In this disclosure, the first and second power storage units are placed in series connection state by turning on the storage-to-storage switch and turning off the bypass switch. On the other hand, the first and second power storage units are placed in a parallel connection state via the inverter and armature winding by turning off the between-power-storage-unit switch and turning on the bypass switch. As described above, according to this disclosure, the connection state of the first and second power storage units can be switched. In addition, the configuration of the motor and inverter is diverted to switch the connection state. This can provide a power conversion device with a simplified configuration.

This disclosure includes a first electrical device and a second electrical device. The first electrical device is either one of the first and second power storage units, and is electrically connectable in parallel with the subject power storage unit, or is electrically connectable between the high-side electrical path and the low-side electrical path. The second electrical device is electrically connectable to a power storage unit other than the subject power storage unit among the first power storage unit and the second power storage unit, between the high-side electrical path and the low-side electrical path. Since the connection points that the first and second electrical devices are respectively connected to are different, for example, it is possible to use the first and second electrical devices differently according to the operating state of the power conversion device, or to avoid the situation where both the first and second electrical devices fail to operate if an abnormality occurs in either the first or second rechargeable battery. That is, it is possible to increase redundancy with respect to the operations of the electrical devices.

### [Brief Description of the Drawings]

The above and other objects, features and advantages of the present disclosure will become more apparent from the following detailed description with reference to the accompanying drawings. The drawings are:
FIG. 1 is a schematic diagram of the overall configuration of a system according to a first embodiment;
FIG. 2 is a diagram of an example of electrical devices;
FIG. 3 is an illustration of operations of switches in a high-voltage direct current charging mode;
FIG. 4 is an illustration of operations of switches in a traveling mode of a vehicle;
FIG. 5 is an illustration of operations of switches in Single-Side Mode 1;
FIG. 6 is an illustration of operations of switches in Single-Side Mode 2;
FIG. 7 is an illustration of operations of switches in Single-Side Mode 3;
FIG. 8 is an illustration of operations of switches in a parking mode;
FIG. 9 is an illustration of operations of switches in a series neutral point mode;
FIG. 10 is a flowchart of an operating state control process for electrical devices;
FIG. 11 is an illustration of operations of switches in Mode 1 among low-voltage direct current charging modes;
FIG. 12 is an illustration of operations of switches in Mode 2 among the low-voltage direct current charging modes;
FIG. 13 is an illustration of operations of switches in Mode 3 among the low-voltage direct current charging modes;
FIG. 14 is an illustration of operations of switches in a low-voltage alternating current charging mode;
FIG. 15 is an illustration of operations of switches in a rechargeable battery warm-up mode;
FIG. 16 is a flowchart of an operating state control process for electrical devices;
FIG. 17 is an illustration of operations of switches in a high-voltage alternating current charging mode according to a second embodiment;
FIG. 18 is a flowchart of an operating state control process for electrical devices;
FIG. 19 is an illustration of operations of switches in a series neutral point mode;
FIG. 20 is a schematic diagram of the overall configuration of a system according to a third embodiment;
FIG. 21 is an illustration of operations of switches in a high-voltage direct current charging mode;
FIG. 22 is an illustration of operations of switches in a traveling mode of a vehicle;
FIG. 23 is an illustration of operations of switches in a parking mode;
   FIG. 24 is an illustration of operations of switches in a series neutral point mode;
FIG. 25 is an illustration of operations of switches in Mode 1 among low-voltage direct current charging modes;
FIG. 26 is an illustration of operations of switches in Mode 2 among the low-voltage direct current charging modes;
FIG. 27 is an illustration of operations of switches in Mode 3 among the low-voltage direct current charging modes;
FIG. 28 is an illustration of operations of switches in a low-voltage alternating current charging mode;
FIG. 29 is an illustration of operations of switches in a rechargeable battery warm-up mode;
FIG. 30 is an illustration of operations of switches in a series neutral point mode according to an example modification of the third embodiment;
FIG. 31 is a schematic diagram of the overall configuration of a system according to a fourth embodiment;
FIG. 32 is a flowchart of an operating state control process for electrical devices;
FIG. 33 is a flowchart of an operating state control process for electrical devices;
FIG. 34 is a schematic diagram of the overall configuration of a system according to a fifth embodiment;
FIG. 35 is an illustration of operations of switches in a high-voltage direct current charging mode;
FIG. 36 is an illustration of operations of switches in a traveling mode of a vehicle;
FIG. 37 is an illustration of operations of switches in Single-Side Mode 1;
FIG. 38 is an illustration of operations of switches in Single-Side Mode 2;
FIG. 39 is an illustration of operations of switches in Single-Side Mode 3;
FIG. 40 is an illustration of operations of switches in a parking mode;
FIG. 41 is an illustration of operations of switches in a series neutral point mode;
FIG. 42 is an illustration of operations of switches in Mode 1 among low-voltage direct current charging modes;
FIG. 43 is an illustration of operations of switches in Mode 2 among the low-voltage direct current charging modes;
FIG. 44 is an illustration of operations of switches in Mode 3 among the low-voltage direct current charging modes;
FIG. 45 is an illustration of operations of switches in a low-voltage alternating current charging mode;
FIG. 46 is an illustration of operations of switches in a rechargeable battery warm-up mode;
FIG. 47 is an illustration of operations of switches in a high-voltage alternating current charging mode according to a sixth embodiment;
FIG. 48 is an illustration of operations of switches in a series neutral point mode;
   FIG. 49 is a schematic diagram of the overall configuration of a system according to a seventh embodiment; and
FIG. 50 is a schematic diagram of the overall configuration of a system according to another embodiment.

### [Description of the Embodiments]

A plurality of embodiments will now be described with reference to accompanying drawings. In the plurality of embodiments, functionally and/or structurally corresponding parts and/or related parts may be assigned the same reference numerals or reference numerals differing in a different centennial series. For the corresponding parts and/or related parts, reference may be made to the description of other embodiments.

### <First Embodiment>

Hereinafter, a power conversion device according to a first embodiment of the present disclosure will now be described with reference to the accompanying drawings. The power conversion device of the present embodiment is mounted to the vehicle, such as an electric vehicle or a hybrid vehicle, and constitutes an on-board system.

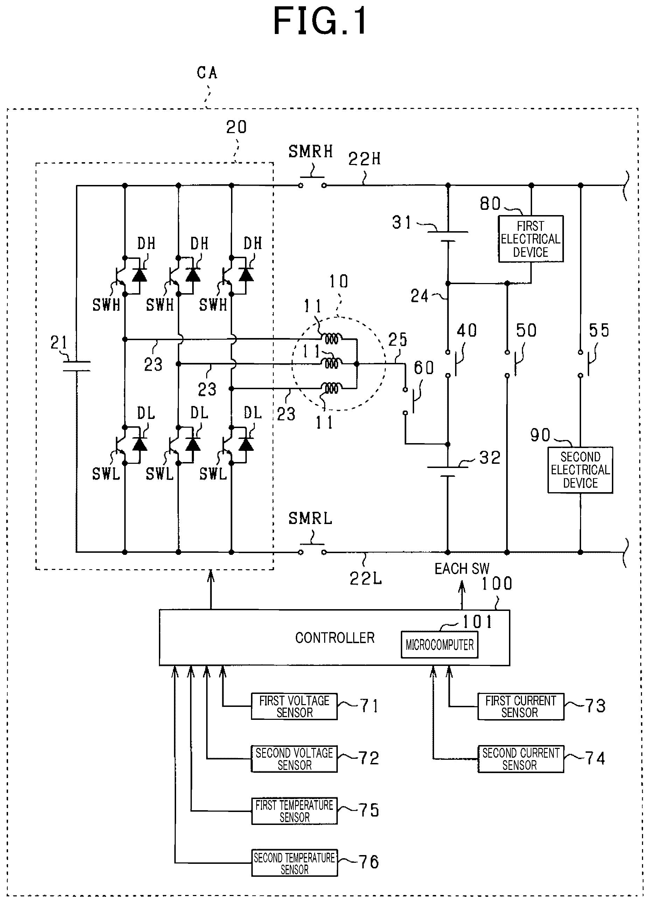

The system mounted to a vehicle CA includes a power conversion device. As illustrated in FIG. 1, the power conversion device includes a motor 10, an inverter 20, a high-side electrical path 22H, and a low-side electrical path 22L. The motor 10 is a three-phase synchronous machine, and includes armature windings 11 of the U, V, and W phases connected in a star configuration, and a rotor (not shown). The armature windings 11 for the respective phases are arranged offset from each other by 120 degrees in electrical angle. The motor 10 is, for example, a permanent magnet synchronous machine. The rotor is capable of transmitting power to the driving wheels of the vehicle CA. Therefore, the motor 10 is a source of torque for driving the vehicle CA.

The inverter 20 includes the series connection of an upper-arm switch SWH and a lower-arm switch SWL for each of three phases. The upper-arm switch SWH is connected in reverse parallel with the upper-arm diode DH, which is a freewheel diode, and the lower-arm switch SWL is connected in reverse parallel with the lower-arm diode DL, which is a freewheel diode. In this embodiment, each of the switches SWH and SWL is an IGBT.

The inverter 20 includes a smoothing capacitor 21. The high-side terminal of the smoothing capacitor 21 is connected to a first end of the elongate high-side electrical path 22H. The low-side terminal of the smoothing capacitor 21 is connected to a first end of the elongate low-side electrical path 22L. The smoothing capacitor 21 may be provided externally to the inverter 20.

For each phase, the first end of the armature winding 11 is connected to the connection point between the emitter, which is the low-side terminal of the upper-arm switch SWH, and the collector, which is the high-side terminal of the lower-arm switch SWL, via a bus bar or other electrically conductive member 23. The second ends of the armature windings 11 for the respective phases are connected at a neutral point. In the present embodiment, the number of turns of the armature winding 11 for each phase is set to be the same. As a result, for example, the inductance of the armature winding 11 for each phase is set to be the same.

The collector of the upper-arm switch SWH for each phase is connected to the high-side electrical path 22H. The emitter of the lower-arm switch SWL for each phase is connected to the low-side electrical path 22L.

The system includes a first rechargeable battery 31 (corresponding to a "first power storage unit") and a second rechargeable battery 32 (corresponding to a "second power storage unit"). Each of the rechargeable batteries 31, 32 is a power source for driving the rotor of the motor 10. Each of the rechargeable batteries 31 and 32 is an assembled battery configured as a series connection of battery cells, which are single cells. The positive terminal of the first rechargeable battery 31 is connected to the second end of the high-side electrical path 22H, which is opposite from the connection point of the smoothing capacitor 21. The negative electrode terminal of the second rechargeable battery 32 is connected to the second end of the low-side electrical path 22L, which is opposite from the connection point of the smoothing capacitor 21. The terminal voltage (e.g. rated voltage) of each battery cell that constitutes the assembled battery is set to be the same. The battery cells are, for example, secondary batteries, such as lithium-ion batteries.

The first and second rechargeable batteries 31 and 32 are chargeable by an external charger described later that is provided externally to the vehicle CA. The external charger is, for example, a stationary charger. The first end of the high-side electrical path 22H is provided with a positive-side connection that is connectable to the positive terminal of the external charger. The first end of the low-side electrical path 22L is provided with a negative-side connection that is connectable to the negative terminal of the external charger.

The power conversion device includes main switches for electrically connecting or disconnecting the first and second rechargeable batteries 31, 32 and the inverter 20. Specifically, the main switches include a high-side main switch SMRH and a low-side main switch SMRL. In the present embodiment, each of the main switches SMRH and SMRL is a mechanical relay. Turning the main switches SMRH and SMRL off blocks the flow of current in both directions, while turning them on allows the flow of current in both directions. The high-side electrical path 22H is provided with the high-side main switch SMRH, and the low-side electrical path 22L is provided with the low-side main switch SMRL. Furthermore, each of the main switches SMRH and SMRL may not be limited to the mechanical relay, but may be a semiconductor switching element.

The power conversion device includes a battery-to-battery switch 40, a negative-terminal-to-terminal bypass switch 50, and a motor-side switch 60. In the present embodiment, the battery-to-battery switch 40, the negative-terminal-to-terminal bypass switch 50, and the motor-side switch 60 are mechanical relays. When the battery-to-battery switch 40, the negative-terminal-to-terminal bypass switch 50, and the motor-side switch 60 are turned off, they block the flow of current in both directions, and when they are turned on, they allow the flow of current in both directions. The battery-to-battery switch 40, the negative-terminal-to-terminal bypass switch 50, and the motor-side switch 60 are not limited to mechanical relays, but may also be, for example, semiconductor switching elements.

The battery-to-battery switch 40 is provided in the battery-to-battery electrical path 24 (corresponding to the "storage-to-storage electrical path") that connects the negative terminal of the first rechargeable battery 31 and the positive terminal of the second rechargeable battery 32. When the battery-to-battery switch 40 is turned on, the negative terminal of the first rechargeable battery 31 and the positive terminal of the second rechargeable battery 32 are electrically connected. When the battery-to-battery switch 40 is turned off, the negative terminal of the first rechargeable battery 31 and the positive terminal of the second rechargeable battery 32 are electrically disconnected.

The negative-terminal-to-terminal bypass switch 50 connects the negative terminal of the first rechargeable battery 31 to the low-side electrical path 22L. When the negative-terminal-to-terminal bypass switch 50 is turned on, the negative terminal of the first rechargeable battery 31 and the negative terminal of the second rechargeable battery 32 are electrically connected. On the other hand, when the negative-terminal-to-terminal bypass switch 50 is turned off, the negative terminal of the first rechargeable battery 31 and the negative terminal of the second rechargeable battery 32 are electrically disconnected.

The motor-side switch 60 is provided in the motor-side electrical path 25 that connects the neutral point of the armature windings 11 to between the second rechargeable battery 32 and the battery-to-battery switch 40 in the battery-to-battery electrical path 24. When the motor-side switch 60 is turned on, the neutral point of the armature windings 11 is electrically connected to the positive terminal of the second rechargeable battery 32. On the other hand, when the motor-side switch 60 is turned off, the neutral point of the armature windings 11 and the positive terminal of the second rechargeable battery 32 are electrically disconnected.

The power conversion device includes a first voltage sensor 71 for detecting the voltage across the first rechargeable battery 31 and a second voltage sensor 72 for detecting the voltage across of the second rechargeable battery 32. The power conversion device includes a first current sensor 73 that detects the current flowing through the first rechargeable battery 31 and a second current sensor 74 that detects the current flowing through the second rechargeable battery 32. The power conversion device includes a first temperature sensor 75 for detecting the temperature of the first rechargeable battery 31 and a second temperature sensor 76 for detecting the temperature of the second rechargeable battery 32. The power conversion device may further include other sensors, such as a rotation angle sensor for detecting the rotation angle (electrical angle) of the rotor and a phase current sensor for detecting the phase current flowing through the armature winding 11 for each phase.

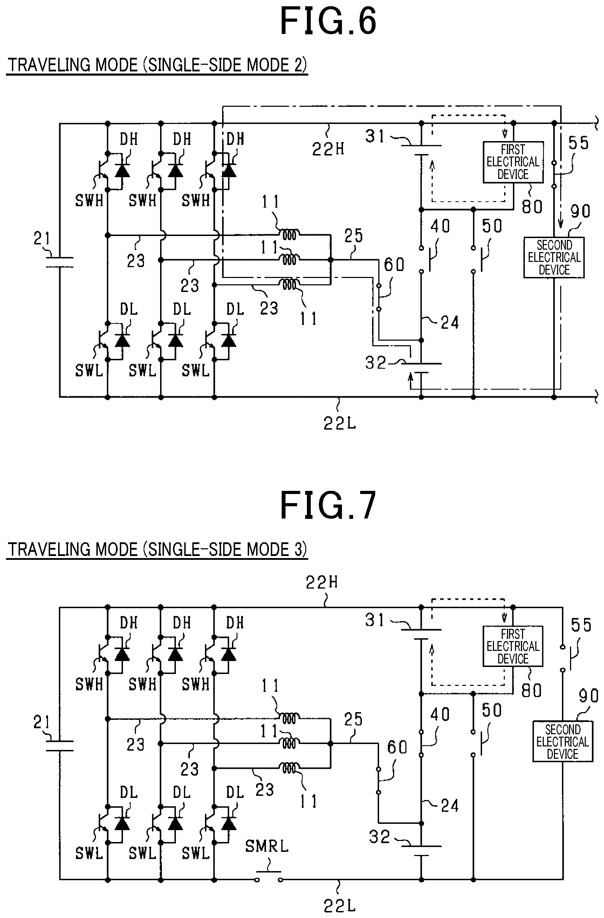

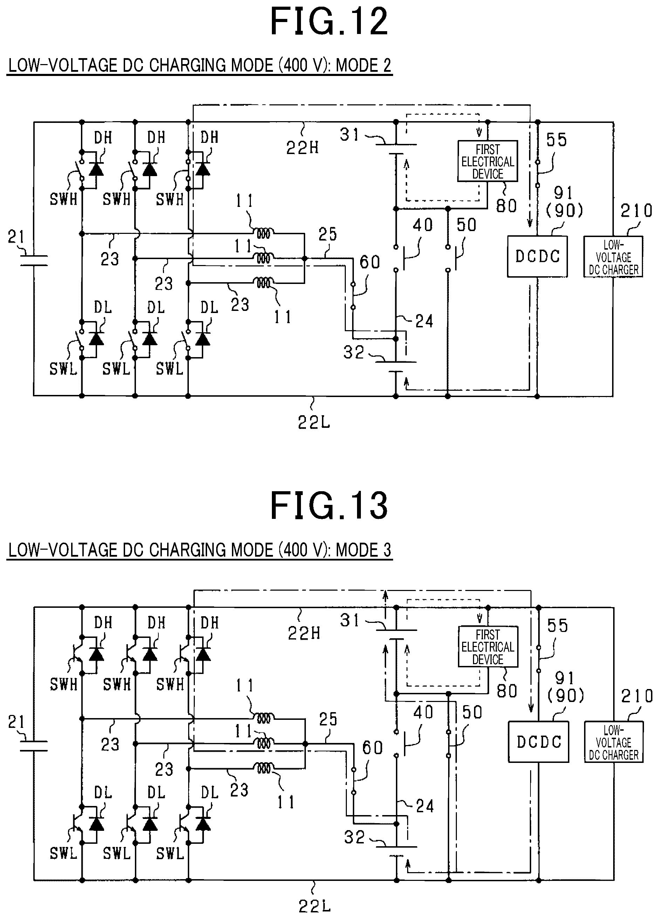

The detection values of each sensor are input to a controller 100 (corresponding to a "control unit") included in the power conversion device. The controller 100 is configured mainly with a microcomputer 101, which is equipped with a CPU. The functions of the microcomputer 101 can be provided by software recorded in a tangible memory device and a computer that executes the software, by software alone, by hardware alone, or by a combination of the software and hardware. For example, in the case where the microcomputer 101 is provided by means of electronic circuits that are hardware, it can be provided by means of digital circuits that include a large number of logic circuits, or by means of analog circuits. For example, the microcomputer 101 executes programs stored in a non-transitory tangible storage medium that serves as its own storage unit. The programs include, for example, programs for processes described later in FIGS. 7 and 13. Methods corresponding to the programs are implemented by executing the programs. The storage unit is, for example, non-volatile memory. The programs stored in the storage unit may be updated via a communication network such as the Internet or Over the Air (OTA).

The controller 100 performs switching control of the respective switches SWH and SWL that constitute the inverter 20 to perform feedback control of the controlled variable of the motor 10 to a target value based on the detected values of the respective sensors. The controlled variable is, for example, torque. For each phase, the upper-arm switch SWH and the lower-arm switch SWL are alternately turned on. This feedback control allows the rotational power of the rotor to be transmitted to the driving wheels of the vehicle CA, and the vehicle CA to travel.

The first and second rechargeable batteries 31 and 32 of the present embodiment are rechargeable batteries with the same rated voltage (e.g. 400 V). The power conversion device includes the first electrical device 80 and the second electrical device 90 as high-voltage accessories that can use the rechargeable batteries as a power supply source. Each electrical device 80, 90 is driven and controlled by controller 100. Each electrical device 80, 90 may be a single electrical device or a set of a plurality of electrical devices.

The high-side terminal of the first electrical device 80 is connected to the high-side electrical path 22H, and the low-side terminal (ground terminal) of the first electrical device 80 is connected to the battery-to-battery electrical path 24. As a result, the first electrical device 80 is electrically connected in parallel with the first rechargeable battery 31. The first electrical device 80 is powered by, for example, the first rechargeable battery 31.

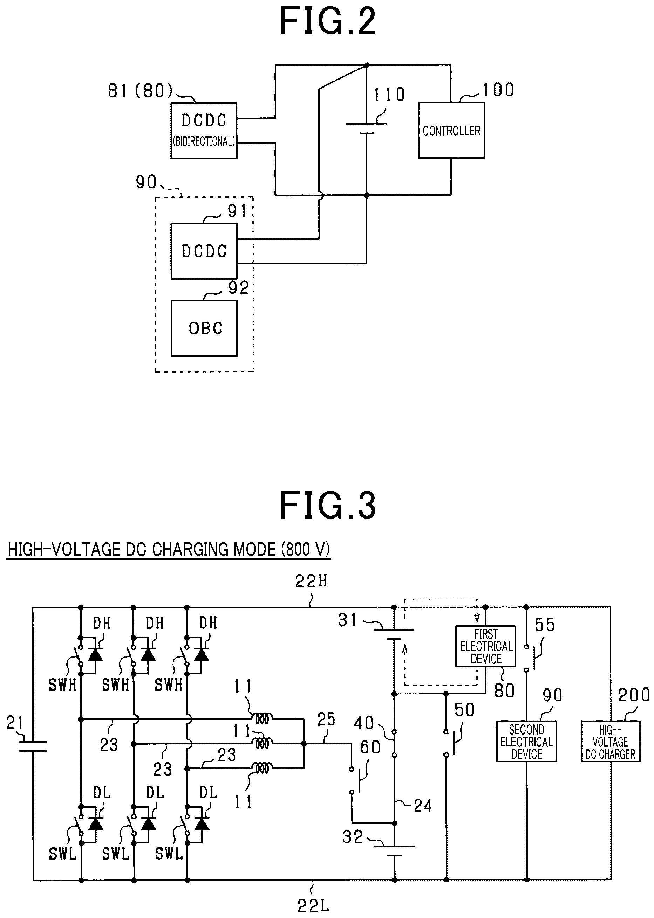

In the present embodiment, the allowable input voltage of the first electrical device 80 is lower than the sum of the voltage (e.g., rated voltage) across the first rechargeable battery 31 and the voltage (e.g., rated voltage) across the second rechargeable batteries 31, 32. The allowable input voltage is, for example, the maximum input voltage that may be supplied to the electrical devices. The first electrical device 80 of the present embodiment includes a first DC-DC converter 81 as illustrated in FIG. 2. The first DC-DC converter 81 has a function to step down the input voltage and supply it to a low-voltage rechargeable battery 110 and the controller 100 of the on-board low-voltage system, and functions as a discharge device to discharge the first rechargeable battery 31. The low-voltage rechargeable battery 110 is a rechargeable battery whose rated voltage (e.g., 12 V) is lower than the rated voltage of the first and second batteries 31, 32. The controller 100 is operated by the power supplied from at least one of the low-voltage rechargeable battery 110 and the first DC-DC converter 81. The first DC-DC converter 81 has a function of boosting the voltage input from the low-voltage rechargeable battery 110 and outputting it to the rechargeable batteries, and functions as a charging device to charge the rechargeable batteries. That is, the first DC-DC converter 81 is a bidirectional DC-DC converter. The first electrical equipment 80 may further include, for example, an electric compressor and a heater that constitute an interior air conditioning system.

The inverter 20 and each of the electrical devices 80, 90, etc. may actually be driven and controlled by their respective controllers. However, in the present embodiment, for convenience, these controllers are depicted together as one controller 100 in FIG. 1 and FIG. 2, etc.

Returning to FIG. 1, the high-side terminal of the second electrical device 90 is connected to the high-side electrical path 22H via the breaker switch 55. The low-side terminal (ground terminal) of the second electrical device 90 is connected to the low-side electrical path 22L. In the present embodiment, the breaker switch 55 is a mechanical relay. The breaker switch 55 blocks current flow in both directions when turned off by the controller 100, and allows current flow in both directions when turned on by the controller 100. The breaker switch 55 is not limited to a mechanical relay, but may be, for example, a semiconductor switching element.

In the present embodiment, the allowable input voltage of the second electrical device 90 is the same as the allowable input voltage of the first electrical device 80 (e.g., 400 V). The second electrical device 90 of the present embodiment includes a second DC-DC converter 91 and an on-board charger 92 (corresponding to an "internal charger"), as illustrated in FIG. 2. The second DC-DC converter 91 has a function of stepping down the input voltage and supplying it to the low-voltage rechargeable battery 110 and the controller 100 of the on-board low-voltage system, and functions as a discharge device that discharges the second rechargeable battery 32.

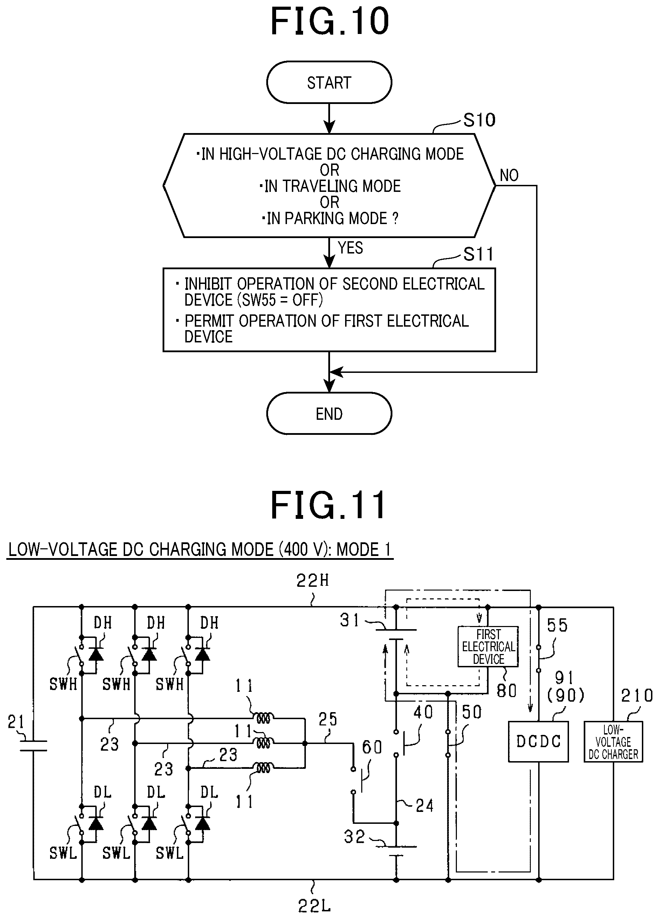

The on-board charger 92 converts the AC voltage supplied from the AC power source 220 (see FIG. 11) provided externally to the vehicle CA into DC voltage and supplies it to the rechargeable battery, thereby charging the rechargeable battery. The AC power source 220 is, for example, a stationary power source. The on-board charger 92 is an interface for connecting to the AC power source 220, and for example, the AC power source 220 is connected to the on-board charger 92 by a user or operator. The on-board charger 92 includes a rectification circuit that converts the AC voltage input from the external AC power source 220 to a DC voltage, and a transformer circuit that transforms the DC voltage output from the rectification circuit and then outputs it.

The positive-terminal side connection of the high-side electrical path 22H and the negative-terminal side connection of the low-side electrical path 22L are interfaces for connecting to an external charger. For example, an external charger is connected to each connection by a user or operator.

**In** the present embodiment, activation statuses of the battery-to-battery switch 40, the negative-terminal-to-terminal bypass switch 50, the motor-side switch 60, and the breaker switch 55 are switched according to a respective control mode of the vehicle CA. Each control mode will now be described.

FIG. 3 illustrates the activation status of each switch in a high-voltage direct current charging mode. When determining that a high-voltage direct current charger 200 is connected to each connection as an external charger, the controller 100 determines that the control mode is the high-voltage direct current charging mode. The direct current charging voltage output from the high-voltage direct current charger 200 is the same voltage as the voltage across the series connection of the first and second rechargeable batteries 31, 32 (specifically, the rated voltage), for example 800V. **In** the high-voltage direct current charging mode, the controller 100 turns on the battery-to-battery switch 40 and turns off the negative-terminal-to-terminal bypass switch 50, the motor-side switch 60, and the upper-arm and lower-arm switches SWH and SWL of the inverter 20. This leads to a state where the first rechargeable battery 31 and the second rechargeable battery 32 are connected in series to the high-voltage direct current charger 200. As a result, a current flows through a closed circuit that includes the high-voltage direct current charger 200, the high-side electrical path 22H, the first rechargeable battery 31, the battery-to-battery switch 40, the second rechargeable battery 32, and the low-side electrical path 22L, and the first rechargeable battery 31 and the second rechargeable battery 32 are charged. **In** this case, the upper-arm switches SWH of the inverter 20 and the motor-side switch 60 are turned off, thus avoiding the charging current of the high-voltage direct current charger 200 flowing through the inverter 20 and the armature windings 11.

In addition, the controller 100 turns off the breaker switch 55 in the high-voltage DC charging mode. In the situation where the battery-to-battery switch 40 is on, the voltage difference between the high-side electrical path 22H and the low-side electrical path 22L exceeds the allowable input voltage of the second electrical device 90. Therefore, the breaker switch 55 is turned off to avoid occurrence of a situation where the second electrical equipment 90 fails. On the other hand, the controller 100 allows the first electrical device 80 to operate in the high-voltage direct current charging mode. Therefore, in this case, the controller 100 operates the first electrical device 80 when there is a request for operation of the first electrical device 80, thereby avoiding occurrence of a situation where both the first and second electrical devices 80, 90 may become inoperable in the high-voltage direct current charging mode. This can increase redundancy with respect to the operations of the electrical devices.

The first DC-DC converter 81 of the first electrical device 80 can be operated in the high-voltage direct current charging mode, enabling power transfer from the first battery 31, which has a relatively large electric power storage capacity, to the low-voltage rechargeable battery 110, which has a relatively small electric power storage capacity, and to the controller 100, via the first DC-DC converter 81. This allows power supply to the controller 100 in the high-voltage direct current charging mode to be maintained properly. In the case where the low-voltage rechargeable battery 110 is not provided in the low-voltage system, it is even more advantageous to be able to transfer power from the first rechargeable battery 31 to the controller 100 via the first DC-DC converter 81.

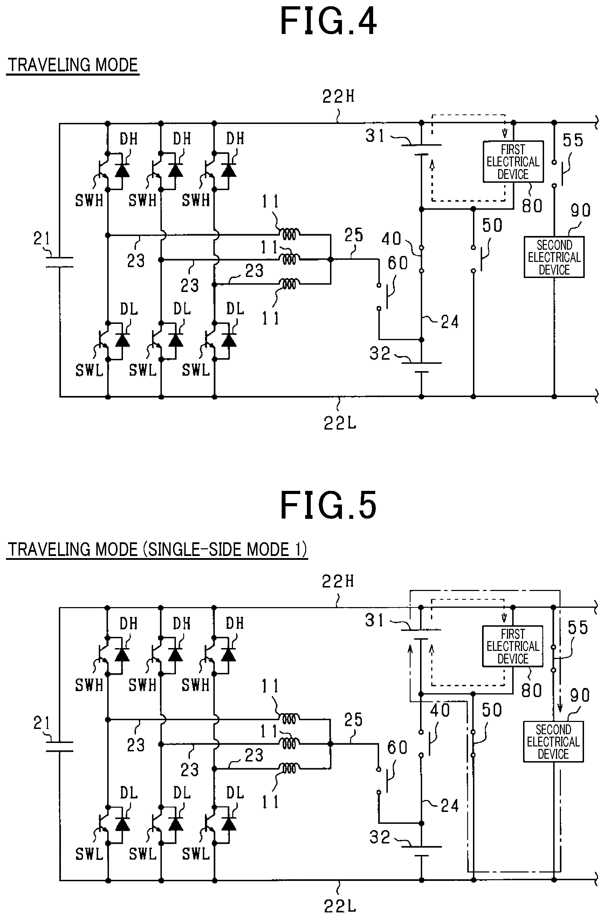

FIG. 4 illustrates the activation status of each switch in a traveling mode of the CA of the vehicle. For example, when determining that a start switch of the vehicle CA has been turned on by the user, the controller 100 determines that the control mode is the traveling mode. In the traveling mode, the controller 100 turns on the battery-to-battery switch 40 and turns off the negative-terminal-to-terminal bypass switch 50 and the motor-side switch 60. The controller 100 alternately turns on the upper-arm switch SWH and the lower-arm switch SWL for each phase to cause the motor 10 to generate a torque for driving the vehicle CA.

In addition, in traveling mode, the controller 100 turns off the breaker switch 55 and inhibits operation of the second electrical device 90. This can avoid occurrence of a situation where the second electrical device 90 fails. On the other hand, the controller 100 permits operation of the first electrical device 80 in the traveling mode. Therefore, when there is a request for operation of the first electrical device 80, the controller 100 operates the first electrical device 80, thereby avoiding occurrence of a situation where both the first and second electrical devices 80, 90 fail to operate in the traveling mode. This can increase redundancy with respect to the operations of the electrical devices.

The first DC-DC converter 81 can be operated in the traveling mode, enabling power transfer from the first battery 31, which has a relatively large electric power storage capacity, to the low-voltage rechargeable battery 110, which has a relatively small electric power storage capacity, and to the controller 100, via the first DC-DC converter 81. This enables power supply to the controller 100 in the traveling mode to be maintained properly. As a result, driving control of the motor 10, etc. by the controller 100 can be continued, thus avoiding occurrence of a situation where the vehicle fails to travel. In the case where the low-voltage rechargeable battery 110 is not provided in the low-voltage system, it is even more advantageous to be able to transfer power from the first rechargeable battery 31 to the controller 100 via the first DC-DC converter 81.

In the traveling mode as illustrated in FIG. 4, both the first and second rechargeable batteries 31 and 32 are used as a power source for driving the motor 10. In addition, as illustrated in FIGS. 5, 6 and 7, Single-Side modes may be implemented in which only one of the first and second rechargeable batteries 31 and 32 is used as a power source for driving the motor 10. FIG. 5 illustrates the actuation status of each switch in Single-Side Mode 1. In Single-Side Mode 1, the controller 100 turns off the battery-to-battery switch 40 and the motor-side switch 60, and turns on the negative-terminal-to-terminal bypass switch 50. In addition, the controller 100 alternately turns on the upper-arm switch SWH and the lower-arm switch SWL for each phase to cause the motor 10 to generate a torque for driving the vehicle CA.

In addition, the controller 100 turns on the breaker switch 55 in Single-Side Mode 1. This allows the first and second electrical devices 80, 90 to be powered by the first rechargeable battery 31. The controller 100 therefore permits operation of the first and second electrical devices 80, 90.

FIG. 6 illustrates the actuation status of each switch in Single-Side Mode 2. In Single-Side Mode 2, the controller 100 turns off the battery-to-battery switch 40 and the negative-terminal-to-terminal bypass switch 50, and turns on the motor-side switch 60. In addition, the controller 100 alternately turns on the upper-arm switch SWH and the lower-arm switch SWL for each phase to cause the motor 10 to generate a torque for driving the vehicle CA.

In addition, the controller 100 turns on the breaker switch 55 in Single-Side Mode 2. This allows the first electrical device 80 to be powered by the first rechargeable battery 31 and the second electrical device 90 to be powered by the second rechargeable battery 32. The controller 100 therefore permits operation of the first and second electrical devices 80, 90.

FIG. 7 illustrates the actuation status of each switch in Single-Side Mode 3. In Single-Side Mode 3, the controller 100 turns off the negative-terminal-to-terminal bypass switch 50 and the low-side main switch SMRL, and turns on the battery-to-battery switch 40 and the motor-side switch 60. **In** addition, the controller 100 alternately turns on the upper-arm switch SWH and the lower-arm switch SWL for each phase to cause the motor 10 to generate a torque for driving the vehicle CA.

Since the first electrical device 80 can be powered by the first rechargeable battery 31 in Single-Side Mode 3, the controller 100 permits operation of the first electrical device 80. **In** addition, the controller 100 turns off the breaker switch 55 in Single-Side Mode 3. This is to avoid occurrence of a failure of the second electrical device 90 due to the voltage across the series connection of the first and second rechargeable batteries 31 and 32 being applied to the second electrical device 90.

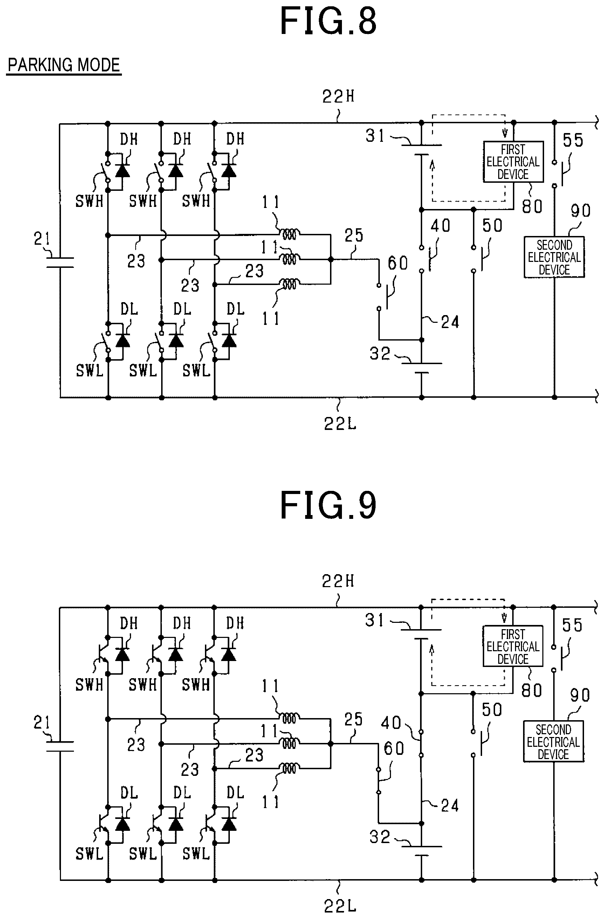

FIG. 8 illustrates the actuation status of each switch in a parking mode of the vehicle CA. For example, when determining that the start switch of the vehicle CA has been turned off by the user, the controller 100 determines that the control mode is the parking mode. **In** the parking mode, the controller 100 turns off the battery-to-battery switch 40, the negative-terminal-to-terminal bypass switch 50, the motor-side switch 60, and the upper-arm and lower-arm switches SWH and SWL of the inverter 20. **In** addition, in the parking mode, the controller 100 turns off the breaker switch 55 to inhibit operation of the second electrical device 90. The reason why the operation is prohibited is as follows: since the battery-to-battery switch 40 is turned off in parking mode, the second electrical device 90 is unable to be powered by the first and second rechargeable batteries 31, 32.

FIG. 9 illustrates the actuation status of each switch in series neutral point mode. The series neutral point mode is a mode in which the battery-to-battery switch 40 and the motor-side switch 60 are turned on, and the negative-terminal-to-terminal bypass switch 50 is turned off. **In** the series neutral point mode, the controller 100 turns off the breaker switch 55. This can avoid occurrence of a situation where the second electrical device 90 fails. On the other hand, operation of the first electrical device 80 is permitted.

In the series neutral point mode, the controller 100 performs switching of the inverter 20 based on the detection values of the first and second current sensors 73, 74 and the first and second voltage sensors 71, 72, and thereby transfers power from one of the first and second rechargeable batteries 31, 32 to the other via the inverter 20, the armature windings 11, and the motor-side electrical path 25. In this switching, the upper-arm and lower-arm switches SWH and SWL are alternately turned on for at least one phase. For example, when the traveling mode is selected, this allows the vehicle CA to travel while equalizing the states of charge (SOC) of the first and second rechargeable batteries 31 and 32.

FIG. 10 illustrates a process flow of an operating state control process for electrical devices to be performed by the controller 100.

At step S10, the controller 100 determines whether the current control mode is set to the high-voltage direct current charging mode, the traveling mode, or the parking mode.

If it is determined at step S10 that the current control mode is one of the high-voltage direct current charging mode, the traveling mode, and the parking mode, the processing flow proceeds to step S11. At step S11, the controller 100 turns off the breaker switch 55 and prohibits operation of the second electrical device 90. The controller 100 permits operation of the first electrical device 80.

The control modes will now be described in more detail. First, the actuation status of each switch in each low-voltage direct current charging mode will be described. There are three low-voltage direct current charging modes.

FIG. 11 illustrates the actuation status of each switch in Mode 1. If the controller 100 determines that the low-voltage direct current charger 210 as an external charger is connected to each connection, the controller 100 determines that the control mode is one of the low-voltage direct current charging modes. The direct current charging voltage output from the low-voltage direct current charger 210 is the same voltage as the rated voltage of the first and second rechargeable batteries 31, 32, for example, 400 V. In Mode 1 among the low-voltage direct current charging modes, the controller 100 turns off the battery-to-battery switch 40, the motor-side switch 60, and the upper-arm and lower-arm switches SWH and SWL of the inverter 20, and turns on the negative-terminal-to-terminal bypass switch 50. As a result, only the first rechargeable battery 31 (corresponding to the "subject power storage unit") among the first and second rechargeable batteries 31, 32 is charged by the low-voltage direct current charger 210. In Mode 1, the second rechargeable battery 32 is not charged.

In addition, in Mode 1, the controller 100 turns on the breaker switch 55. This enables power transfer from the first rechargeable battery 31 to the second electrical device 90, permitting operation of the second electrical device 90. Therefore, both the first and second electrical devices 80 and 90 can be operated.

FIG. 12 illustrates the actuation status of each switch in Mode 2. In Mode 2, the controller 100 turns off the battery-to-battery switch 40, the negative-terminal-to-terminal bypass switch 50, and the lower-arm switches SWL of the inverter 20, and turns on the motor-side switch 60 and the upper-arm switch SWH for at least one phase of the inverter 20. This allows only the second rechargeable battery 32 to be charged by the low-voltage direct current charger 210. In this case, the charging current from the low-voltage direct current charger 210 flows through the upper-arm switch SWH, the conductive member 23, the armature winding 11, and the motor-side electrical path 25. In Mode 2, the first rechargeable battery 31 is not charged.

In addition, in Mode 2, the controller 100 turns on the breaker switch 55. This enables power transfer from the second rechargeable battery 32 to the second electrical device 90, permitting operation of the second electrical device 90. Therefore, both the first and second electrical devices 80 and 90 can be operated.

FIG. 13 shows the activation status of each switch in Mode 3. In Mode 3, the controller 100 turns off the battery-to-battery switch 40 and turns on the negative-terminal-to-terminal bypass switch 50 and the motor-side switch 60. In Mode 3, the charging power of the first rechargeable battery 31 and the second rechargeable battery 32 can be adjusted individually based on the detection values of the first and second current sensors 73, 74 and the first and second voltage sensors 71, 72. This adjustment can be implemented by alternately turning on the upper-arm and lower-arm switches SWH and SWL for at least one phase of the inverter 20 while outputting the charging current from the low-voltage direct current charger 210, or by repeatedly turning on and off the upper-arm switch SWH for at least one phase and turning off the lower-arm switches SWL while outputting the charging current from the low-voltage direct current charger 210. Here, the charging power of the first and second rechargeable batteries 31 and 32 may be individually adjusted by adjusting the duty ratio (Ton/Tsw), which is a ratio of the on-time period Ton of the upper-arm switch SWH to one switching period Tsw for each phase. According to Mode 3, both the first and second rechargeable batteries 31, 32 can be charged.

In addition, in Mode 3, the controller 100 turns on the breaker switch 55. This enables power transfer from the first and second rechargeable batteries 31, 32 to the second electrical device 90, permitting operation of the second electrical device 90. Therefore, both the first and second electrical devices 80, 90 can be operated.

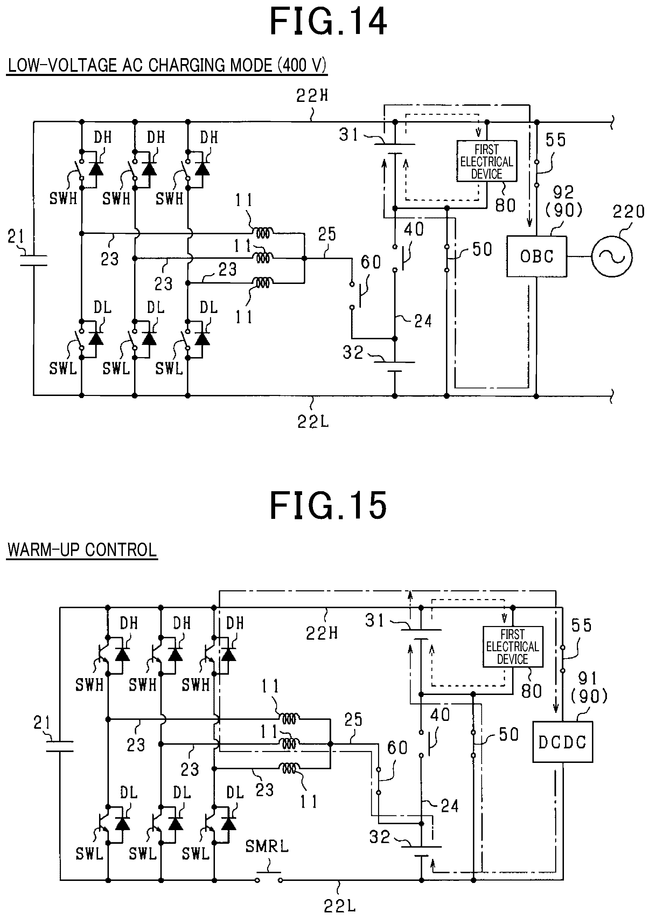

FIG. 14 illustrates the actuation status of each switch in the low-voltage alternating current charging mode. When determining that the external alternating current power source 220 is connected to the on-board charger 92 and that there is a low-voltage charging request, the controller 100 determines that the control mode is the low-voltage alternating current charging mode. In the low-voltage alternating current charging mode, the controller 100 performs driving control of the on-board charger 92 so that the charging voltage output from the on-board charger 92 to the first rechargeable battery 31 is equal to the voltage of the first rechargeable battery 31. In the low-voltage alternating current charging mode, the controller 100 turns off the battery-to-battery switch 40, the motor-side switch 60, and the upper-arm and lower-arm switches SWH and SWL of the inverter 20, and turns on the negative-terminal-to-terminal bypass switch 50. This allows only the first rechargeable battery 31 among the first and second rechargeable batteries 31 and 32 to be charged by the on-board charger 92.

In addition, in the low-voltage alternating current charging mode, the controller 100 turns on the breaker switch 55. This enables power transfer from the first rechargeable battery 31 to the second electrical device 90, permitting operation of the second electrical device 90. Therefore, both the first and second electrical devices 80, 90 can be operated.

The actuation status of each of the battery-to-battery switch 40, the negative-terminal-to-terminal bypass switch 50, the motor-side switch 60, and the inverter 20 in the low-voltage alternating current charging mode illustrated in FIG. 14 is the actuation status corresponding to Mode 1 illustrated in FIG. 8. Besides, the above actuation status in the low-voltage alternating current charging mode may be the actuation status corresponding to Mode 2 illustrated in FIG. 12 or the actuation status corresponding to Mode 3 illustrated in FIG. 13. In the above actuation status corresponding to Mode 2, only the second rechargeable battery 32 among the first and second rechargeable batteries 31 and 32 is charged by the on-board charger 92. In the above actuation status corresponding to Mode 3, the controller 100 may charge both the first and second rechargeable batteries 31 and 32 using the on-board charger 92. In this case, the charging power of the first rechargeable battery 31 and the second rechargeable battery 32 may be adjusted individually by adjusting the duty ratio (Ton/Tsw), which is the ratio of the on-time period Ton of the upper-arm switch SWH to one switching period Tsw for each phase.

FIG. 15 illustrates the actuation status of each switch in the rechargeable battery warm-up mode. When determining that a battery temperature Tbat is lower than a target temperature Tth, the controller 100 determines that the control mode is the warm-up mode. The battery temperature Tbat may be set to the lower of the temperature detected by the first temperature sensor 75 of the first rechargeable battery 31 (hereinafter referred to as a "first detected temperature TA") and the temperature detected by the second temperature sensor 76 of the second rechargeable battery 32 (hereinafter referred to as a "second detected temperature TB").

In the warm-up mode, the controller 100 turns off the battery-to-battery switch 40 and the low-side main switch SMRL, and turns on the negative-terminal-to-terminal bypass switch 50 and the motor-side switch 60. The controller 100 performs switching of the inverter 20 so that an alternating current charging/discharging current flows through each of the first rechargeable battery 31 and the second rechargeable battery 32 via the armature winding 11 and the inverter 20, for example, until the battery temperature Tbat reaches the target temperature Tth. This switching is performed by alternately turning on the upper-arm and lower-arm switches SWH and SWL for at least one phase. The warm-up mode can promote heat generation by the internal resistance of each battery and allows the first and second rechargeable batteries 31 and 32 to be warmed up. This allows the maximum charging power of the first and second rechargeable batteries 31 and 32 to be increased, and for example, the charging time for charging the first and second rechargeable batteries 31 and 32 while the vehicle CA is parked to be decreased.

**In** addition, in the warm-up mode, the controller 100 turns on the breaker switch 55. This allows both the first and second electrical devices 80 and 90 to operate.

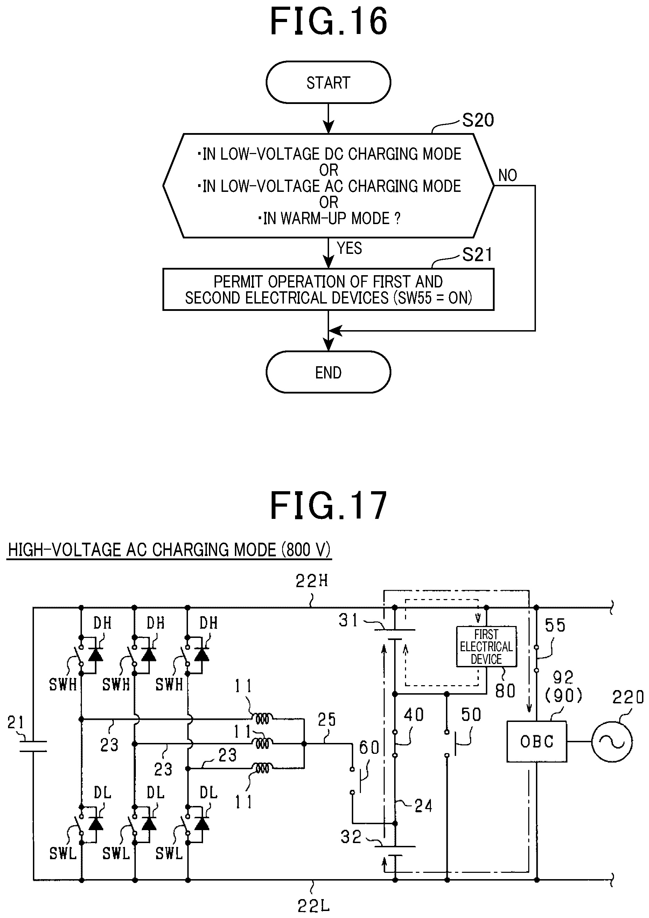

FIG. 16 illustrates a process flow of an operating state control process for electrical devices to be performed by the controller 100.

At step S20, the controller 100 determines whether the current control mode is set to any of the low-voltage direct current charging mode, the low-voltage alternating current charging mode, and the warm-up mode.

At step S20, if the controller 100 determines that the current control mode is any of the low-voltage direct current charging modes, the low-voltage alternating current charging modes, and the warm-up mode, the process flow proceeds to step S21. At step S21, the controller 100 turns on the breaker switch 55 and permits operation of the first and second electrical devices 80 and 90.

The present embodiment described above can provide a power conversion device with improved redundancy.

### <Modifications of First Embodiment>

▪ In a case where the controller 100 determines that a value obtained by subtracting the voltage across the second rechargeable battery 32 detected by the second voltage sensor 72 (hereinafter referred to as a "second detected voltage VB") from the voltage across the first rechargeable battery 31 detected by the first voltage sensor 71 (hereinafter referred to as a "first detected voltage VA") exceeds a determination threshold ΔVjde, the power consumption of the first electrical device 80 may be forcibly increased so that the difference between the first detected voltage VA and the second detected voltage VB approaches zero. This allows the voltage across the first rechargeable battery 31 and the voltage across the second rechargeable battery 32 to be equalized. The determination threshold ΔVjde is a value less than the rated voltage of each of the rechargeable batteries 31 and 32. The determination threshold ΔVjde is set to a value that is less than or equal to 1/10, 1/20, 1/50, or 1/100 of the lower of the rated voltages of the respective rechargeable batteries 31 and 32.
▪ The rated voltage of the first rechargeable battery 31 (e.g. 400 V) may be higher than the rated voltage of the second rechargeable battery 32 (e.g. 200 V). In this case, for example, the allowable input voltage of the first electrical device 80 may be set to the same voltage as the rated voltage of the first rechargeable battery 31, and the allowable input voltage of the second electrical device 90 may be set to the same voltage as the rated voltage of either of the first and second rechargeable batteries 31 and 32. In a case where the rated voltage of the first rechargeable battery 31 and the rated voltage of the second rechargeable battery 32 are different, when the controller 100 determines that the value obtained by subtracting the second detected voltage VB from the first detected voltage VA exceeds the voltage threshold Vj, the controller 100 may forcibly increase the power consumption of the first electrical device 80 so that the difference between the first detected voltage VA and the second detected voltage VB approaches a specified value. Here, the voltage threshold Vj may be set to a voltage difference between the first rechargeable battery 31 and the second rechargeable battery 32 such that the maximum inrush current and the steady-state value, which are determined from the relationship between "the impedance of the current path between the first rechargeable battery 31 and the second rechargeable battery 32 (specifically, for example, the impedance of the first and second rechargeable batteries 31, 32, the impedance of the inverter 20 and armature winding 11, and the forward impedance of the diode of the inverter 20)" and "the voltage difference between the first rechargeable battery 31 and the second rechargeable battery 32", are less than or equal to an allowable value, for example, while the motor-side switch 60 is on. Here, the above allowable value is, for example, the maximum current that the components in the current path can withstand in terms of safety. The specified value may be set to the same value as the voltage threshold Vj, or may be set to a value less than the voltage threshold Vj.
▪ The breaker switch 55 may not be provided, and the high-side terminal of the second electrical device 90 may constantly be connected to the high-side electrical path 22H. In this case, the controller 100 only needs to perform the process of inhibiting operation of the second electrical device 90 at step S11 in FIG. 10.

### <Second Embodiment>

A second embodiment will now be described with reference to the accompanying drawings, focusing on differences from the first embodiment. In the present embodiment, the allowable input voltage of the second electrical device 90 is higher than the allowable input voltage of the first electrical device 80, and is the same voltage (e.g. 800 V) as the sum of the voltage (e.g. rated voltage) across the first rechargeable battery 31 and the voltage (e.g. rated voltage) across the second rechargeable battery 32. That is, the second electrical device 90 has a high withstand voltage.

FIG. 17 illustrates the actuation status of each switch when the control mode is the high-voltage alternating current charging mode. When determining that the alternating current power source 220 is connected to the on-board charger 92 and that there is a high-voltage charging request, the controller 100 determines that the control mode is the high-voltage alternating current charging mode. In the high-voltage alternating current charging mode, the controller 100 performs driving control of the on-board charger 92 so that the charging voltage output from the on-board charger 92 to the first and second rechargeable batteries 31 and 32 is equal to the rated voltage of the series connection of the first and second rechargeable batteries 31 and 32. In the high-voltage alternating current charging mode, the controller 100 turns on the battery-to-battery switch 40 and turns off the negative-terminal-to-terminal bypass switch 50, the motor-side switch 60, and the upper-arm and lower-arm switches SWH and SWL of the inverter 20. This allows both the first and second rechargeable batteries 31 and 32 to be charged by the on-board charger 92.

In addition, in the high-voltage alternating current charging mode, the controller 100 turns on the breaker switch 55 and permits operation of both the first electrical device 80 and the second electrical device 90. The reason why the second electrical device 90 is allowed to operate is that the allowable input voltage of the second electrical device 90 is the same as the total rated voltage of the first and second rechargeable batteries 31, 31, 32.

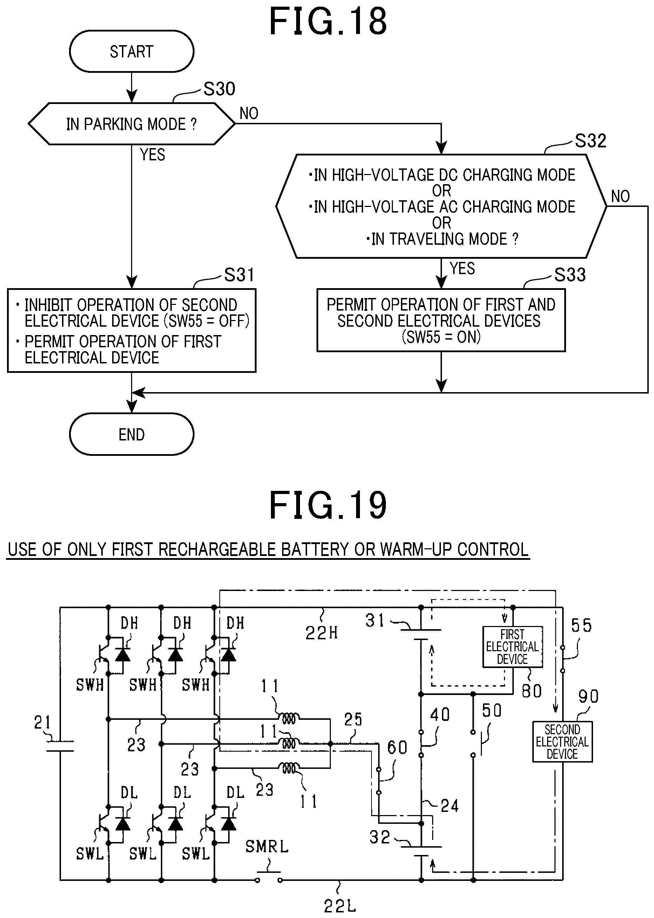

FIG. 18 illustrates a process flow of an operating state control process for electrical devices to be performed by the controller 100.

At step S30, the controller 100 determines whether the current control mode is the parking mode.

If the controller 100 determines at step S30 that the current control mode is the parking mode, the process flow proceeds to step S31. At step S31, the controller 100 turns off the breaker switch 55 and inhibits operation of the second electrical device 90. In addition, the controller 100 permits operation of the first electrical device 80.

On the other hand, if the controller 100 determines at step S30 that the current control mode is not the parking mode, the process flow proceeds to step S32. At step S32, the controller 100 determines whether the current control mode is any of the high-voltage direct current charging mode, the high-voltage alternating current charging mode, and the traveling mode.

If the controller 100 determines at step S32 that the current control mode is any of the high-voltage direct current charging mode, the high-voltage alternating current charging mode, and the traveling mode, the process flow proceeds to step S33. At step S33, the controller 100 turns on the breaker switch 55 and permits operation of the first and second electrical devices 80 and 90.

FIG. 19 illustrates the actuation status of each switch in the series neutral point mode. In the series neutral point mode, the controller 100 turns off the low-side main switch SMRL and turns on the breaker switch 55. In this case, when the control mode is the traveling mode, the controller 100 may permit operation of the first and second electrical devices 80 and 90, and may also perform switching of the inverter 20 with only the first rechargeable battery 31 of the first and second rechargeable batteries 31 and 32 being used as the driving power source for the motor 10. In addition, the controller 100 may also perform warm-up control of the first and second rechargeable batteries 31 and 32 by switching the inverter 20. When selecting the control mode illustrated in FIG. 18, the controller 100 may perform the process step S33 in FIG. 18.

### <Third Embodiment>

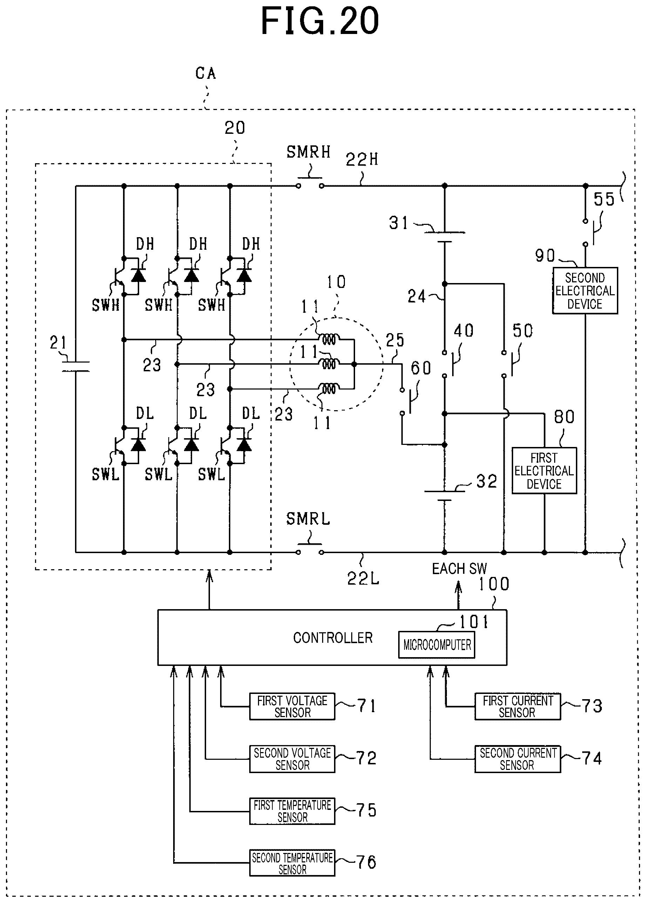

A third embodiment will now be described with reference to the accompanying drawings, focusing on differences from the first embodiment. In the present embodiment, as illustrated in FIG. 20, the first electrical device 80 is connected in parallel with the second rechargeable battery 32 (corresponding to the "subject power storage unit") rather than the first rechargeable battery 31. In addition, the rated voltage of the first rechargeable battery 31 (e.g. 400 V) is set to a voltage higher than or equal to the rated voltage of the second rechargeable battery 32 (e.g. 200 V).

Each control mode of the present embodiment will now be described.

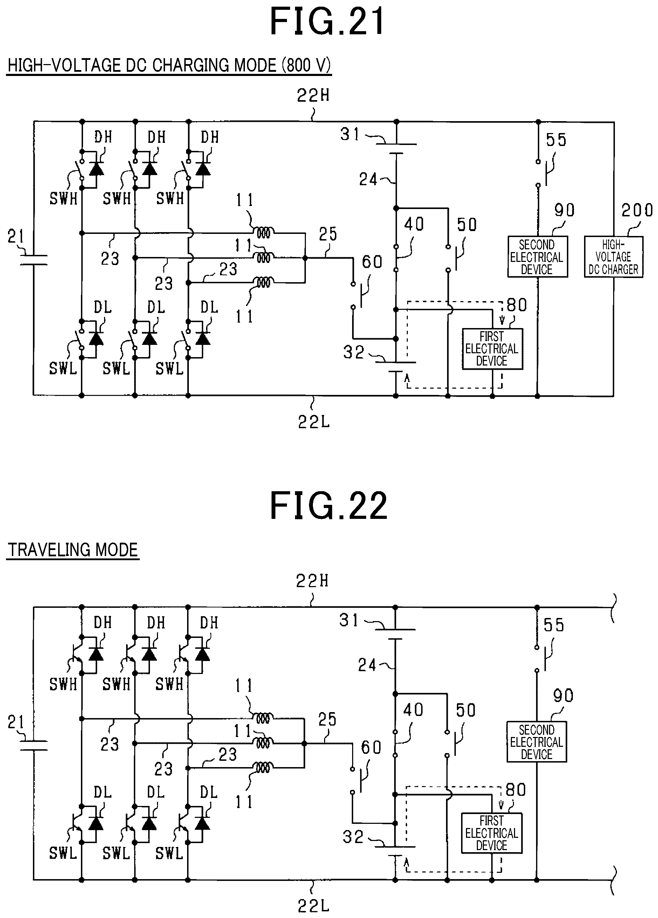

FIG. 21 illustrates the actuation status of each switch in the high-voltage direct current charging mode. In the high-voltage direct current charging mode, the controller 100 turns on the battery-to-battery switch 40 and turns off the negative-terminal-to-terminal bypass switch 50, the motor-side switch 60, and the upper-arm and lower-arm switches SWH and SWL of the inverter 20. This allows the first and second rechargeable batteries 31 and 32 to be charged.

In addition, the controller 100 turns off the breaker switch 55 in the high-voltage direct current charging mode. This avoids occurrence of a situation where the second electrical device 90 fails. On the other hand, the controller 100 permits operation of the first electrical device 80 in the high-voltage direct current charging mode. Therefore, when there is a request for operation of the first electrical device 80, the controller 100 operates the first electrical device 80 using the second rechargeable battery 32 as the power supply source, thereby avoiding occurrence of a situation where both the first and second electrical devices 80, 90 fail to operate in the high-voltage direct current charging mode.

The first DC-DC converter 81 of the first electrical device 80 can be operated in the high-voltage direct current charging mode, enabling power transfer from the first rechargeable battery 31, which has a relatively large electric power storage capacity, to the low-voltage rechargeable battery 110, which has a relatively small electric power storage capacity, and to the controller 100 via the first DC-DC converter 81. This enables power supply to the controller 100 in the high-voltage direct current charging mode to be maintained properly. In the case where the low-voltage rechargeable battery 110 is not provided in the low-voltage system, it is even more advantageous to be able to power the controller 100 from the first rechargeable battery 31 via the first DC-DC converter 81.

FIG. 22 illustrates the actuation status of each switch in the traveling mode. In the traveling mode, the controller 100 turns on the battery-to-battery switch 40 and turns off the negative-terminal-to-terminal bypass switch 50 and the motor-side switch 60. The controller 100 alternately turns on the upper-arm switch SWH and the lower-arm switch SWL for each phase to cause the motor 10 to generate a torque for driving the vehicle CA.

In addition, the controller 100 turns off the breaker switch 55 and inhibits the operation of the second electrical device 90 in the traveling mode. This avoids the occurrence of a situation where the second electrical device 90 fails. On the other hand, the controller 100 permits the operation of the first electrical device 80 in the traveling mode.

The first DC-DC converter 81 can be operated in the traveling mode, enabling power transfer from the first battery 31, which has a relatively large electric power storage capacity, to the low-voltage rechargeable battery 110, which has a relatively small electric power storage capacity, and to the controller 100, via the first DC-DC converter 81. This enables power supply to the controller 100 in the traveling mode to be maintained properly. As a result, driving control of the motor 10, etc. by the controller 100 is allowed to be continued, thus avoiding occurrence of a situation where the vehicle fails to travel. In the case where the low-voltage rechargeable battery 110 is not provided in the low-voltage system, it is even more advantageous to be able to transfer power from the first rechargeable battery 31 to the controller 100 via the first DC-DC converter 81.

The controller 100 may implement the Single-Side Modes 1 to 3 described in the first embodiment in the traveling mode.

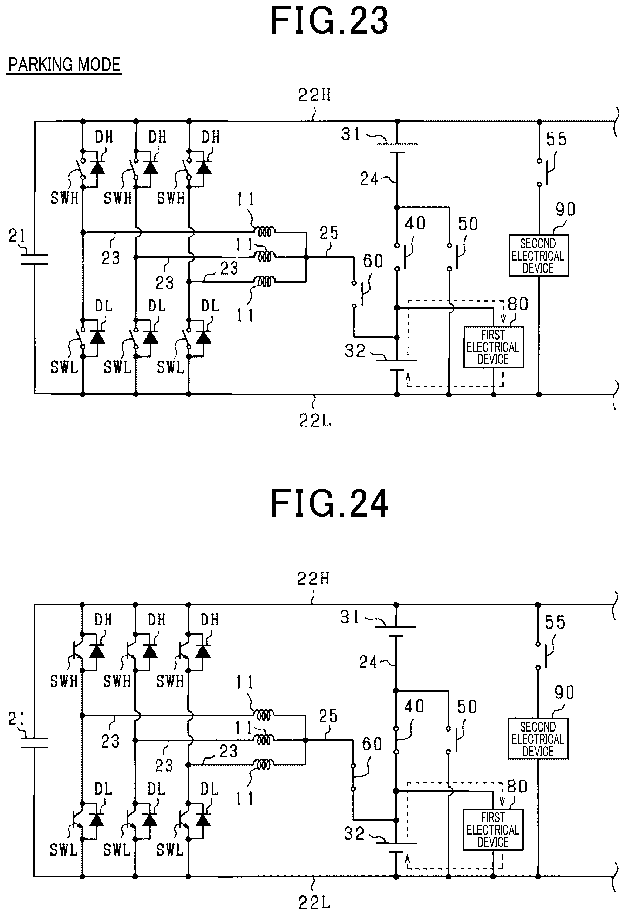

FIG. 23 illustrates the actuation status of each switch in the parking mode of the vehicle CA. In the parking mode, the controller 100 turns off the battery-to-battery switch 40, the negative-terminal-to-terminal bypass switch 50, the motor-side switch 60, and the upper-arm and lower-arm switches SWH and SWL of the inverter 20. In the parking mode, the controller 100 turns off the breaker switch 55 to inhibit operation of the second electrical device 90.

FIG. 24 illustrates the actuation status of each switch in series neutral point mode. In the series neutral point mode, the controller 100 turns off the breaker switch 55. This can avoid occurrence of a situation where the second electrical device 90 fails. On the other hand, operation of the first electrical device 80 is permitted.

In the series neutral point mode, the controller 100 performs switching of the inverter 20 based on the detection values of the first and second current sensors 73, 74 and the first and second voltage sensors 71, 72, and thereby transfers power from one of the first and second rechargeable batteries 31, 32 to the other via the inverter 20, the armature windings 11, and the motor-side electrical path 25. In this switching, the upper-arm and lower-arm switches SWH and SWL are alternately turned on for at least one phase. For example, when the traveling mode is selected, this allows the vehicle CA to travel while equalizing the states of charge (SOC) of the first and second rechargeable batteries 31 and 32.

The controller 100 performs the same operating state control process as in FIG. 10 described above.

Subsequently, the actuation status of each switch in each one of the three modes of low-voltage direct current charging mode will now be described.

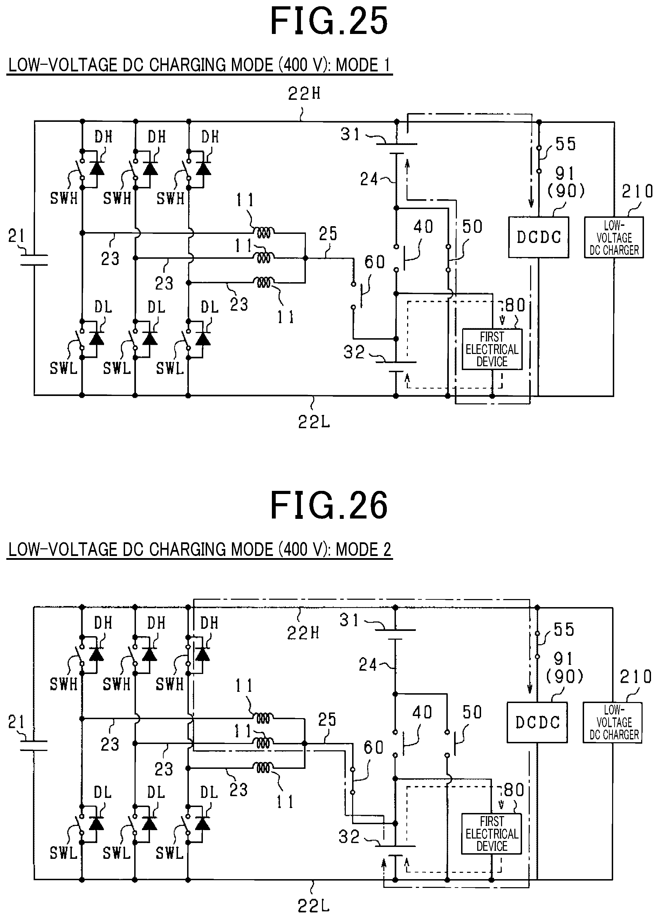

FIG. 25 illustrates the actuation status of each switch in Mode 1. In Mode 1 of the low-voltage direct current charging mode, the controller 100 turns off the battery-to-battery switch 40, the motor-side switch 60, and the upper-arm and lower-arm switches SWH and SWL of the inverter 20, and turns on the negative-terminal bypass switch 50. As a result, only the first rechargeable battery 31 among the first and second rechargeable batteries 31, 32 is charged by the low-voltage direct current charger 210. In addition, the controller 100 turns on the breaker switch 55 in Mode 1. This enables power transfer from the first rechargeable battery 31 to the second electrical device 90, permitting operation of the second electrical device 90. Therefore, both the first and second electrical devices 80, 90 can be operated.

FIG. 25 illustrates the actuation status of each switch in Mode 2. In Mode 2, the controller 100 turns off the battery-to-battery switch 40, the negative-terminal-to-terminal bypass switch 50, and the lower-arm switches SWL of the inverter 20, and turns on the motor-side switch 60 and the upper-arm switch SWH for at least one phase of the inverter 20. As a result, only the second rechargeable battery 32 among the first and second rechargeable batteries 31, 32 is charged by the low-voltage direct current charger 210. In addition, the controller 100 turns on the breaker switch 55 in Mode 2. This enables power transfer from the second rechargeable battery 32 to the second electrical device 90, permitting operation of the second electrical device 90. Therefore, both the first and second electrical devices 80, 90 can be operated.

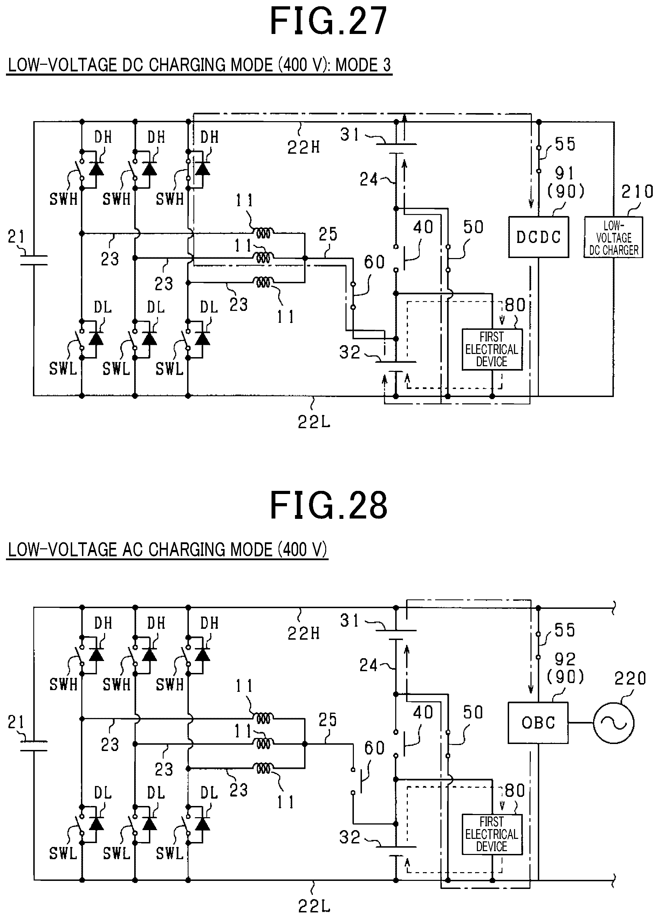

FIG. 27 illustrates the actuation status of each switch in Mode 3. In Mode 3, the controller 100 turns off the battery-to-battery switch 40 and turns on the negative-terminal-to-terminal bypass switch 50 and the motor-side switch 60. In Mode 3, as in the first embodiment, the charging power of the first rechargeable battery 31 and the second rechargeable battery 32 can be adjusted individually based on the detection values of the first and second current sensors 73, 74 and the first and second voltage sensors 71, 72.

In addition, in Mode 3, the controller 100 turns on the breaker switch 55. This enables power transfer from the first and second rechargeable batteries 31, 32 to the second electrical device 90, permitting operation of the second electrical device 90. Therefore, both the first and second electrical devices 80, 90 can be operated.

FIG. 28 illustrates the actuation status of each switch in the low-voltage alternating current charging mode. In the low-voltage alternating current charging mode, the controller 100 turns off the battery-to-battery switch 40, the motor-side switch 60, and the upper-arm and lower-arm switches SWH and SWL of the inverter 20, and turns on the negative-terminal-to-terminal bypass switch 50. This allows only the first rechargeable battery 31 among the first and second rechargeable batteries 31 and 32 to be charged by the on-board charger 92. In addition, in the low-voltage alternating current charging mode, the controller 100 turns on the breaker switch 55. This enables power transfer from the first rechargeable battery 31 to the second electrical device 90, permitting operation of the second electrical device 90. Therefore, both the first and second electrical devices 80, 90 can be operated.

The actuation status of each of the battery-to-battery switch 40, the negative-terminal-to-terminal bypass switch 50, the motor-side switch 60, and the inverter 20 in the low-voltage alternating current charging mode illustrated in FIG. 28 is the actuation status corresponding to Mode 1 illustrated in FIG. 25. Besides, as in the first embodiment, the above actuation status in the low-voltage alternating current charging mode may be the actuation status corresponding to Mode 2 illustrated in FIG. 26 or the actuation status corresponding to Mode 3 illustrated in FIG. 27.

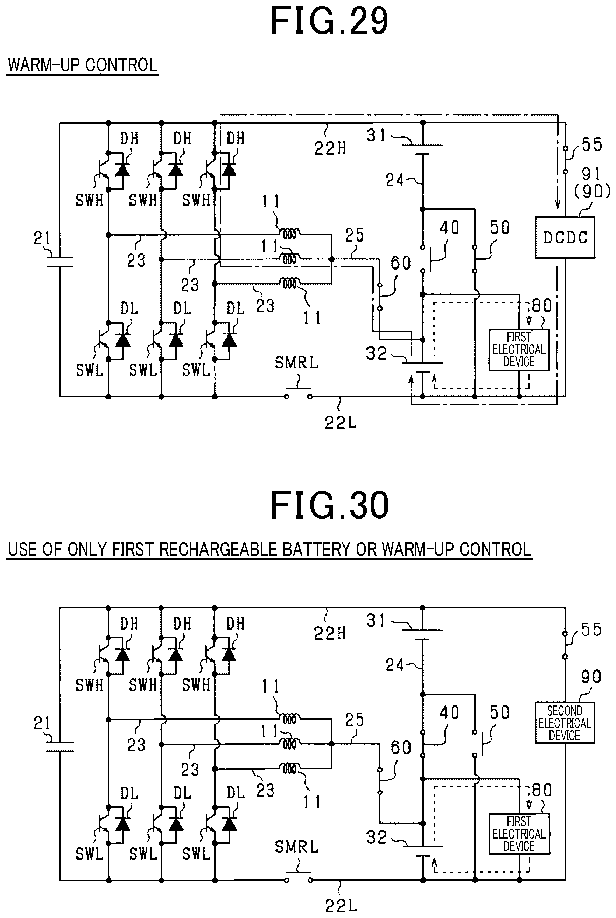

FIG. 29 illustrates the actuation status of each switch in the rechargeable battery warm-up mode. In the warm-up mode, the controller 100 turns off the battery-to-battery switch 40 and the low-side main switch SMRL, and turns on the negative-terminal-to-terminal bypass switch 50 and the motor-side switch 60. The controller 100, as in the first embodiment, performs switching of the inverter 20 so that an alternating current charging/discharging current flows through each of the first rechargeable battery 31 and the second rechargeable battery 32 via the armature winding(s) 11 and the inverter 20, for example, until the battery temperature Tbat reaches the target temperature Tth. In addition, in the warm-up mode, the controller 100 turns on the breaker switch 55. This allows both the first and second electrical devices 80 and 90 to operate.

The controller 100 performs the same operating state control process as in FIG. 16 described above.

By the way, in the state where the motor-side switch 60 is on, if the voltage across the second rechargeable battery 32 is too high as compared to the voltage across the first rechargeable battery 31, a phenomenon may occur in which a large current flows into the first rechargeable battery 31 via the motor-side electrical path 25, the armature windings 11, the upper-arm diodes DH connected in anti-parallel with the upper-arm switches SWH, and the high-side electrical path 22H. In this case, the reliability of the power conversion device and each of the rechargeable batteries 31, 32 may decrease.

In order to prevent such a situation from occurring, in the present embodiment, the rated voltage of the first rechargeable battery 31 is set to a voltage higher than or equal to the rated voltage of the second rechargeable battery 32.

The difference between the voltage across the first rechargeable battery 31 and the voltage across the second rechargeable battery 32 may increase due to discharge from the first and second rechargeable batteries 31 and 32. Thus, the controller 100 adjusts the power consumption or operation frequency of the first electrical device 80 so that the absolute value of the difference between the first detected voltage VA and the second detected voltage VB is less than or equal to the above voltage threshold Vj. Specifically, the controller 100 adjusts the power consumption or operation frequency of the first electrical device 80 so that the first detected voltage VA is higher than or equal to the second detected voltage VB and the absolute value of the above difference is less than or equal to the above specified value.

When adjusting the power consumption of the first electrical device 80, the controller 100 only needs to make the power consumption of the first electrical device 80 greater than the power consumption of the second electrical device 90. Here, in a case where one or each of the first and second electrical devices 80, 90 includes a plurality of electrical devices, the power consumption of one or each of the first and second electrical devices 80, 90 may refer to the total power consumption of the plurality of electrical devices. For example, the power consumption of the second electrical device 90 is the total power consumption of the second DC-DC converter 91 and the on-board charger 92. Making the power consumption of the first electrical device 80 greater than that of the second electrical device 90 leads to the discharge power of the second rechargeable battery 32 being greater than that of the first rechargeable battery 31, facilitating establishment of the following relationship: "|VA-VB| ≤ specified value".

When adjusting the operation frequency of the first electrical device 80, the controller 100 only needs to make the operation frequency of the first electrical device 80 higher than that of the second electrical device 90. Here, the operation frequency is a ratio of the operation period Topr of the electrical device to the specified time period Ttl (=Topr/Ttl). In the case where the control mode is any of the high-voltage direct current charging mode, the high-voltage alternating current charging mode, the low-voltage direct current charging mode, and the low-voltage alternating current charging mode, the specified time period Ttl is, for example, the execution period of the charging mode. In the case where the control mode is the traveling mode, the specified time period Ttl is, for example, one trip of the vehicle CA. One trip is, for example, a time period from when the start switch of the vehicle CA is turned on by the user to when it is turned off. Making the operation frequency of the first electrical device 80 higher than that of the second electrical device 90 leads to the total power consumption of the first electrical device 80 during the specified time period Ttl being greater than the total power consumption of the second electrical device 90 during the specified time period Ttl. That facilitates establishment of the relationship "|VA-VB| ≤ specified value".

### <Modifications of Third Embodiment>

▪ The rated voltage of the first rechargeable battery 31 and the rated voltage of the second rechargeable battery 32 may be equal to each other.
▪ The controller 100 may make the power consumption of the second electrical device 90 less than that of the first electrical device 80.
▪ The breaker switch 55 may not be provided, and the high-side terminal of the second electrical device 90 may be constantly connected to the high-side electrical path 22H.
▪ As in the second embodiment, the allowable input voltage of the second electrical device 90 may be higher than the allowable input voltage of the first electrical device 80, and the same voltage (e.g. 800V) as the total value of the voltage (e.g. rated voltage) across the first rechargeable battery 31 and the voltage (e.g. rated voltage) across the second rechargeable batteries 31, 32. In this case, the controller 100 only needs to perform the operating state control process in the same manner as in FIG. 18.

FIG. 30 illustrates the actuation status of each switch in the series neutral point mode in this case. In the series neutral point mode, as in the second embodiment, the controller 100 turns off the low-side main switch SMRL and turns on the breaker switch 55. In this case, when the control mode is the traveling mode, the controller 100 may permit operation of the first and second electrical devices 80 and 90, and may perform switching of the inverter 20 with use of only the first rechargeable battery 31 among first and second rechargeable batteries 31 and 32 as the driving power source for the motor 10. In addition, the controller 100 may also perform warm-up control of the first and second rechargeable batteries 31 and 32 by switching the inverter 20.

### <Fourth Embodiment>

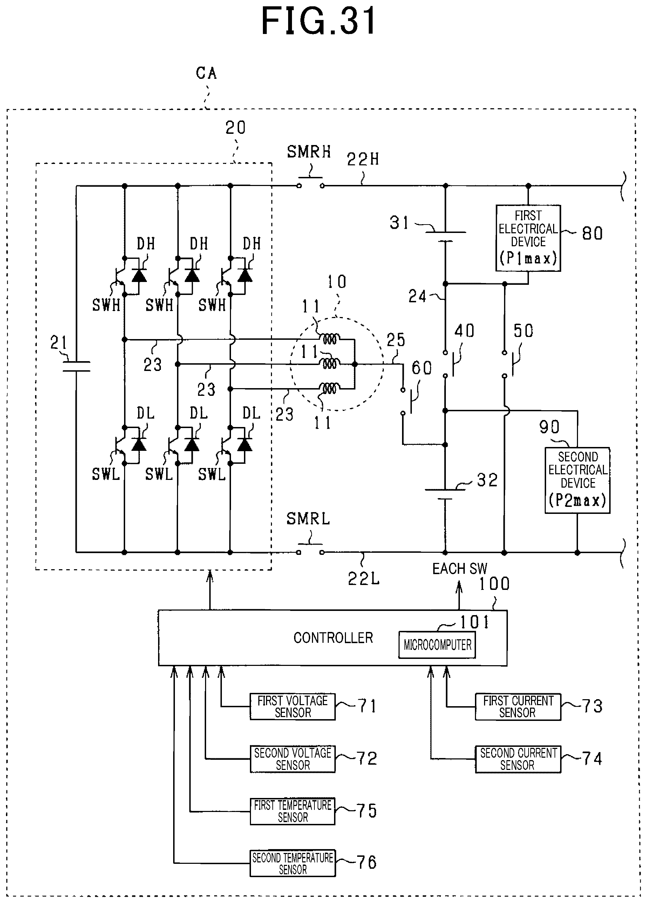

A fourth embodiment will now be described with reference to the accompanying drawings, focusing on differences from the first embodiment. As illustrated in FIG. 31, in the present embodiment, the second electrical device 90 is connected in parallel with the second rechargeable battery 32 (corresponding to a "subject power storage unit"). The rated voltage of the first rechargeable battery 31 is set to a voltage higher than or equal to the rated voltage of the second rechargeable battery 32, specifically, a voltage higher than the rated voltage of the second rechargeable battery 32. The allowable input voltage of the second electrical device 90 is lower than the total value of the voltage (e.g., rated voltage) across the first rechargeable battery 31 and the voltage (e.g., rated voltage) across the second rechargeable battery 32 and is, for example, the same as the allowable input voltage of the first electrical device 80. In addition, the maximum power consumption P2max of the second electrical device 90 is less than the maximum power consumption P1max of the first electrical device 80. Here, in a case where one or each of the first and second electrical devices 80, 90 includes a plurality of electrical devices, the maximum power consumption of one or each of the first and second electrical devices 80, 90 may refer to the sum of the maximum power consumptions of the plurality of electrical devices.

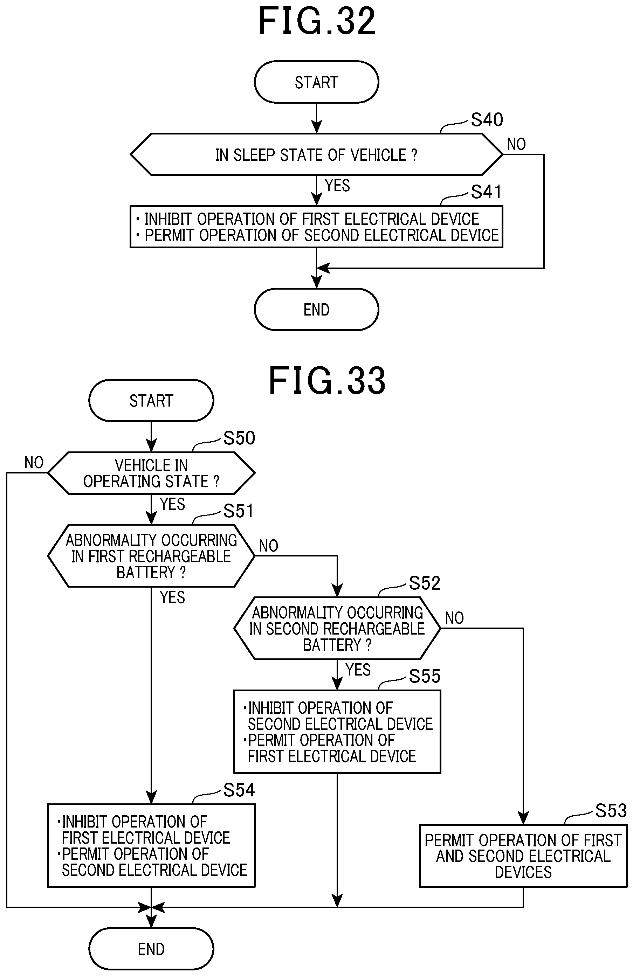

FIG. 32 illustrates a process flow of an operating state control process to be performed by the controller 100.

At step S40, the controller 100 determines whether the vehicle CA is in a sleep state. The sleep state refers to, for example, a state in which the control mode is the parking mode or any of the charging modes.

If the controller 100 determines at step S40 that the vehicle CA is in the sleep state, the process flow proceeds to step S41. At step S41, the controller 100 inhibits operation of the first electrical device 80 and permits operation of the second electrical device 90. This is intended to improve the efficiency of the power conversion device. That is, the DC-DC converter, as an electrical device, has the characteristic that the smaller the difference between the input and output voltages, the smaller the current (e.g. dark current) flowing through the DC-DC converter, and the higher the power conversion efficiency. Therefore, operating the second DC-DC converter 91 connected to the second rechargeable battery 32, which has a lower rated voltage than the first rechargeable battery 31, can increase the efficiency of the power conversion device.

The second DC-DC converter 91 of the second electrical device 90 can be operated, enabling power transfer from the second rechargeable battery 32, which has a relatively large power storage capacity, to the low-voltage rechargeable battery 110, which has a relatively small power storage capacity, and to the controller 100 via the second DC-DC converter 91. This enables power supply to the controller 100 be maintained properly. In the case where the low-voltage rechargeable battery 110 is not provided in the low-voltage system, it is even more advantageous to be able to transfer power from the second rechargeable battery 32 to the controller 100 via the second DC-DC converter 91.

The second electrical device 90 is constantly connected to the second rechargeable battery 32 without use of the breaker switch such as a relay. Therefore, it is not necessary to operate the breaker switch in the sleep state, and power transfer from the second rechargeable battery 32 to the second electrical device 90 may be implemented properly.

In the state where the motor-side switch 60 is on, if the voltage across the second rechargeable battery 32 is too high as compared to the voltage across the first rechargeable battery 31, a large current may flow from the second rechargeable battery 32 to the first rechargeable battery 31 via the motor-side electrical path 25, the armature winding(s) 11, the upper-arm diode(s) DH and the high-side electrical path 22H. To address this issue, the controller 100 adjusts the power consumption or operation frequency of the second electrical device 90 so that the absolute value of the difference between the first detected voltage VA and the second detected voltage VB is less than or equal to the above specified value. Specifically, the controller 100 adjusts the power consumption or operation frequency of the second electrical device 90 so that the first detected voltage VA is higher than or equal to the second detected voltage VB and the absolute value of the above difference is less than or equal to the specified value. This adjustment may be implemented in a similar manner as in the third embodiment.

When adjusting the power consumption of the second electrical device 90, the controller 100 only needs to make the power consumption of the second electrical device 90 greater than that of the first electrical device 80. Here, in a case where one or each of the first and second electrical devices 80, 90 includes a plurality of electrical devices, the power consumption of one or each of the first and second electrical devices 80, 90 may refer to the total power consumption of the plurality of electrical devices. Making the power consumption of the second electrical device 90 greater than that of the first electrical device 80 leads to the discharge power of the second rechargeable battery 32 being greater than that of the first rechargeable battery 31, facilitating establishment of the following relationship: "|VA-VB| ≤ specified value".

When adjusting the operation frequency of the first electrical device 80, the operation frequency of the second electrical device 90 may be set to be higher than the operation frequency of the first electrical device 80. Here, the operation frequency has the same definition as in the third embodiment. Making the operation frequency of the second electrical device 90 higher than that of the first electrical device 80 leads to the total power consumption of the second electrical device 90 during the specified time period Ttl being greater than the total power consumption of the first electrical device 80 during the specified time period Ttl. This facilitates establishment of the relationship "VA-VB ≤ specified value".

FIG. 33 illustrates a process flow of an operating state control process to be performed by the controller 100. The process in FIG. 33 is performed when the vehicle CA is in the operating state, not in the sleep state.

The controller 100 determines, at step S50, whether the vehicle CA is in the operating state, not in the sleep state. For example, when the controller 100 has been activated (for example, when either the traveling mode or any of the charging modes is selected), the controller 100 determines that the vehicle CA is in the operating state.

If the answer is YES at step S50, the process flow proceeds to step S51. At step S51, the controller 100 determines whether an abnormality has occurred in the first rechargeable battery 31. If the controller 100 determines at step S51 that the first rechargeable battery 31 is normal, the process flow proceeds to step S52. At step S52, the controller 100 determines whether an abnormality has occurred in the second rechargeable battery 32.

If the controller 100 determines at step S52 that the second rechargeable battery 32 is normal, the process flow proceeds to step S53. At step S53, the controller 100 permits operation of the first and second electrical devices 80 and 90.

If the controller 100 determines at step S51 that an abnormality has occurred in the first rechargeable battery 31, the process flow proceeds to step S54. At step S54, the controller 100 inhibits operation of the first electrical device 80 and permits operation of the second electrical device 90. At step S54, the battery-to-battery switch 40 may be turned off.

If the controller 100 determines at step S52 that an abnormality has occurred in the second rechargeable battery 32, the process flow proceeds to step S55. At step S55, the controller 100 inhibits operation of the second electrical device 90 and permits operation of the first electrical device 80. Here, the battery-to-battery switch 40 may be turned off at step S55.

According to the process illustrated in FIG. 33, for example, in the case where the control mode is the traveling mode, even if an abnormality occurs in either the first or second rechargeable battery 31, 32, driving control of the electrical device can be continued using the normal rechargeable battery.

### <Modifications of Fourth Embodiment>

▪ In order to maintain the relationship "|VA-VB| ≤ specified value", the controller 100 may be configured to charge the first rechargeable battery 31 from the low-voltage rechargeable battery 110 using the first DC-DC converter 81, which functions as a charger.
▪ A breaker switch may be provided on the high-side terminal side of at least one of the first and second electrical devices 80, 90.

### <Fifth Embodiment>

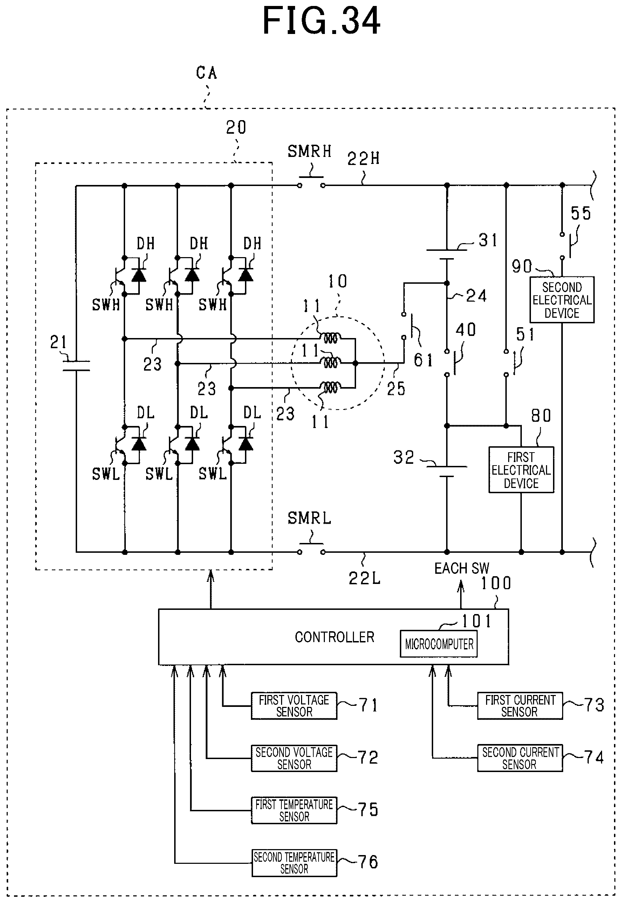

A fifth embodiment will now be described with reference to the accompanying drawings, focusing on differences from the first embodiment. As illustrated in FIG. 34, the power conversion device of the present embodiment includes a positive-terminal-to-terminal bypass switch 51, but does not include the negative-terminal-to-terminal bypass switch 50 as illustrated in FIG. 1. The motor-side electrical path 25 connects the neutral point of the armature windings 11 to a portion of the battery-to-battery electrical path 24 that is on the first rechargeable battery 31 side of the battery-to-battery switch 40. The motor-side electrical path 25 is provided with a motor-side switch 61.

The first electrical device 80 is connected in parallel not with the first rechargeable battery 31 but with the second rechargeable battery 32.

Each control modes will now be described.

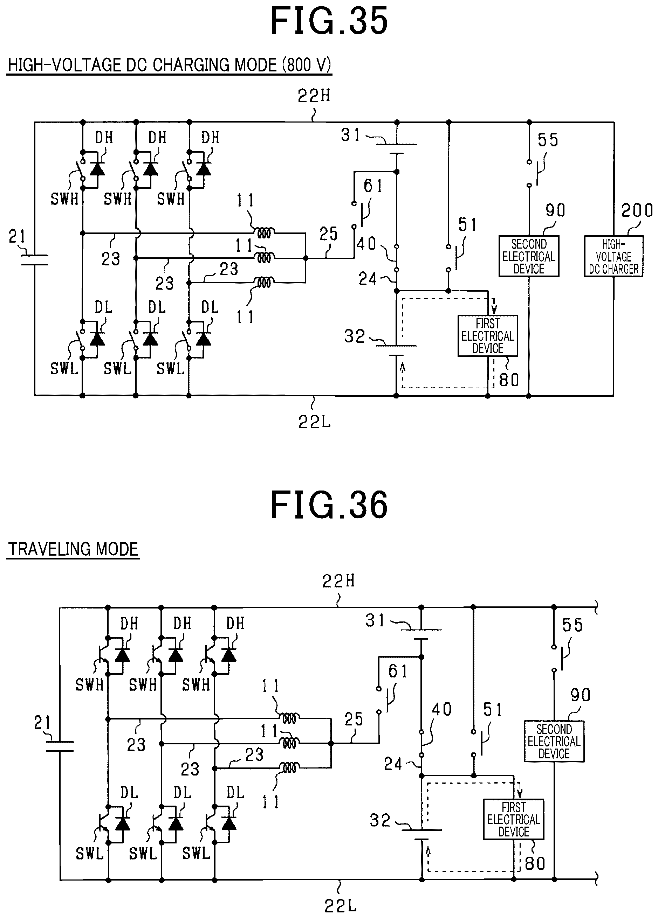

FIG. 35 illustrates the actuation status of each switch in the high-voltage direct current charging mode. In the high-voltage direct current charging mode, the controller 100 turns on the battery-to-battery switch 40 and turns off the positive-terminal-to-terminal bypass switch 51, the motor-side switch 61, and the upper-arm and lower-arm switches SWH and SWL of the inverter 20. This leads to a series connection of the first rechargeable battery 31 and the second rechargeable battery 32 being charged by the high-voltage direct current charger 200. In addition, the controller 100 turns off the breaker switch 55 in the high-voltage direct current charging mode. This can avoid occurrence of a situation where the second electrical device 90 fails.

On the other hand, the controller 100 permits operation of the first electrical device 80 in the high-voltage direct current charging mode. Therefore, when there is a request for operation of the first electrical device 80, the controller 100 operates the first electrical device 80 using the second rechargeable battery 32 as the power supply source, thereby avoiding occurrence of a situation where both the first and second electrical devices 80, 90 fail to operate in the high-voltage direct current charging mode.

The first DC-DC converter 81 of the first electrical device 80 can be operated in the high-voltage direct current charging mode, enabling power transfer to the low-voltage rechargeable battery 110 and the controller 100. This allows power supply to the controller 100 in the high-voltage direct current charging mode to be maintained properly. In the case where the low-voltage rechargeable battery 110 is not provided in the low-voltage system, it is even more advantageous to be able to transfer power from the second rechargeable battery 32 to the controller 100 via the first DC-DC converter 81.

FIG. 36 illustrates the actuation status of each switch in the traveling mode of the vehicle CA. In the traveling mode, the controller 100 turns on the battery-to-battery switch 40 and turns off the positive-terminal-to-terminal bypass switch 51 and the motor-side switch 61. In addition, the controller 100 alternately turns on the upper-arm switch SWH and the lower-arm switch SWL for each phase to cause the motor 10 to generate a torque for driving the vehicle CA.

In addition, in the traveling mode, the controller 100 turns off the breaker switch 55 and inhibits operation of the second electrical device 90. This can avoid occurrence of a situation where the second electrical device 90 fails. On the other hand, the controller 100 permits operation of the first electrical device 80 in the traveling mode. Therefore, when there is a request for operation of the first electrical device 80, the controller 100 operates the first electrical device 80, thereby avoiding occurrence of a situation where both the first and second electrical devices 80, 90 fail to operate in the traveling mode.

The first DC-DC converter 81 can be operated in the traveling mode, enabling power transfer from the second rechargeable battery 32 to the low-voltage rechargeable battery 110 and the controller 100 via the first DC-DC converter 81. This allows power supply to the controller 100 in the traveling mode to be maintained properly. As a result, driving control of the motor 10, etc. by the controller 100 can be continued, thus avoiding occurrence of a situation where the vehicle CA fails to travel. In the case where the low-voltage rechargeable battery 110 is not provided in the low-voltage system, it is even more advantageous to be able to transfer power from the second battery 32 to the controller 100 via the first DC-DC converter 81.

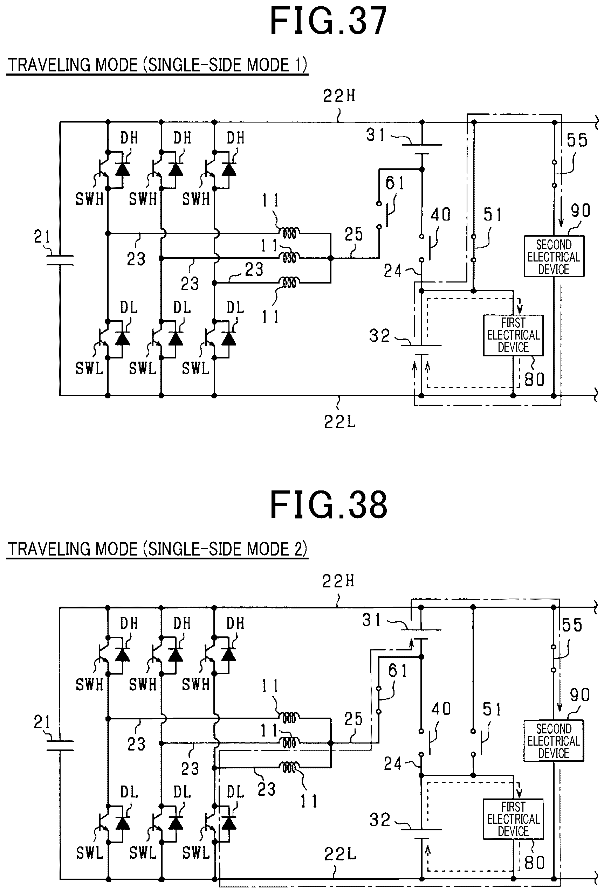

In the traveling mode, as illustrated in FIG. 36, both the first and second rechargeable batteries 31 and 32 are used as a power source for driving the motor 10. In addition, as illustrated in FIGS. 37, 38 and 39, Single-Side modes may be implemented in which only one of the first and second rechargeable batteries 31 and 32 is used as a power source for driving the motor 10.

FIG. 37 illustrates the actuation status of each switch in Single-Side Mode 1. In Single-Side Mode 1, the controller 100 turns off the battery-to-battery switch 40 and the motor-side switch 61, and turns on the positive-terminal-to-terminal bypass switch 51. In addition, the controller 100 alternately turns on the upper-arm switch SWH and the lower-arm switch SWL for each phase to cause the motor 10 to generate a torque for driving the vehicle CA.

**In** addition, the controller 100 turns on the breaker switch 55 in Single-Side Mode 1. This allows the first and second electrical devices 80, 90 to be powered by the second rechargeable battery 32. The controller 100 therefore permits operation of the first and second electrical devices 80, 90.

FIG. 38 illustrates the actuation status of each switch in Single-Side Mode 2. **In** Single-Side Mode 2, the controller 100 turns off the battery-to-battery switch 40 and the positive-terminal-to-terminal bypass switch 51, and turns on the motor-side switch 61. **In** addition, the controller 100 alternately turns on the upper-arm switch SWH and the lower-arm switch SWL for each phase to cause the motor 10 to generate a torque for driving the vehicle CA.

In addition, the controller 100 turns on the breaker switch 55 in Single-Side Mode 2. This allows the first electrical device 80 to be powered by the second rechargeable battery 32 and the second electrical device 90 to be powered by the first rechargeable battery 31. The controller 100 therefore permits operation of the first and second electrical devices 80, 90.

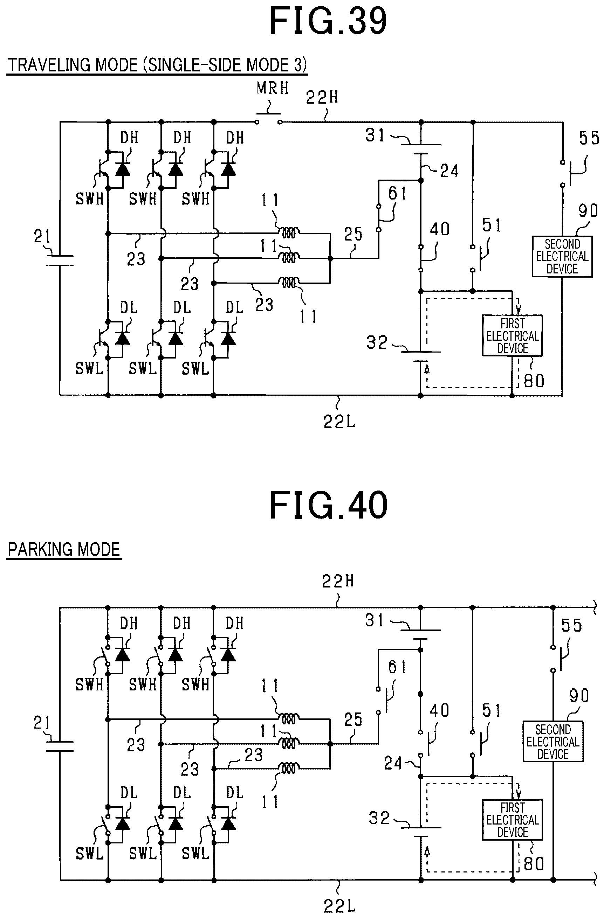

FIG. 39 illustrates the actuation status of each switch in Single-Side Mode 3. **In** Single-Side Mode 3, the controller 100 turns off the positive-terminal-to-terminal bypass switch 51 and the high-side main switch SMRH, and turns on the battery-to-battery switch 40 and the motor-side switch 61. The controller 100 alternately turns on the upper-arm switch SWH and the lower-arm switch SWL for each phase to cause the motor 10 to generate a torque for driving the vehicle CA.

Since the first electrical device 80 can be powered by the first rechargeable battery 31 in Single-Side Mode 3, the controller 100 permits operation of the first electrical device 80. **In** addition, the controller 100 turns off the breaker switch 55 in Single-Side Mode 3. This can avoid occurrence of a failure of the second electrical device 90 due to application of the voltage across the series connection of the first and second rechargeable batteries 31 and 32 to the second electrical device 90.

FIG. 40 illustrates the actuation status of each switch in the parking mode of the vehicle CA. In the parking mode, the controller 100 turns off the battery-to-battery switch 40, the positive-terminal-to-terminal bypass switch 51, the motor-side switch 61, and the upper-arm and lower-arm switches SWH and SWL of the inverter 20. In the parking mode, the controller 100 turns off the breaker switch 55 to inhibit operation of the second electrical device 90.

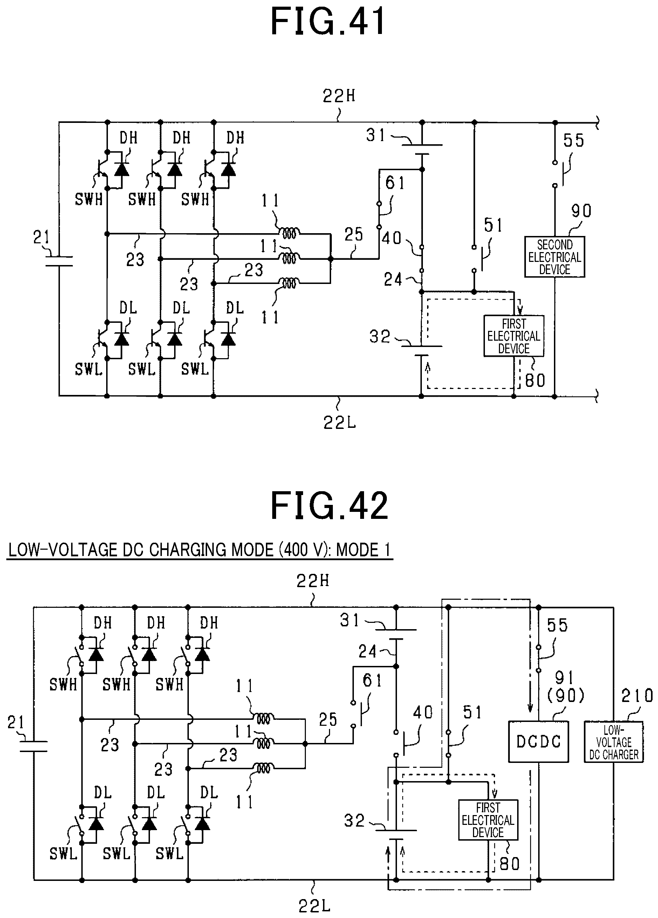

FIG. 41 illustrates the actuation status of each switch in the series neutral point mode. The series neutral point mode is a mode in which the battery-to-battery switch 40 and the motor-side switch 61 are turned on, and the positive-terminal-to-terminal bypass switch 51 is turned off. In the series neutral point mode, the controller 100 turns off the breaker switch 55. This can avoid occurrence of a situation where the second electrical device 90 fails. On the other hand, operation of the first electrical device 80 is permitted.

In the series neutral point mode, the controller 100 performs switching of the inverter 20 based on the detection values of the first and second current sensors 73, 74 and the first and second voltage sensors 71, 72, and thereby transfers power from one of the first and second rechargeable batteries 31, 32 to the other via the inverter 20, the armature windings 11, and the motor-side electrical path 25. For example, when the traveling mode is selected, this allows the vehicle CA to travel while equalizing the states of charge (SOC) of the first and second rechargeable batteries 31 and 32.

The controller 100 performs the same operating state control process as in FIG. 10 described above.

Subsequently, the actuation status of each switch in each one of the three modes of low-voltage direct current charging mode will now be described.

FIG. 42 illustrates the actuation status of each switch in Mode 1. In Mode 1, the controller 100 turns off the battery-to-battery switch 40, the motor-side switch 61, and the upper-arm and lower-arm switches SWH and SWL of the inverter 20, and turns on the positive-terminal-to-terminal bypass switch 51. This allows only the first rechargeable battery 31 (corresponding to the "subject power storage unit") among the first and second rechargeable batteries 31, 32 to be charged by the low-voltage direct current charger 210. In Mode 1, the first rechargeable battery 31 is not charged.

In addition, in Mode 1, the controller 100 turns on the breaker switch 55. This enables power transfer from the second rechargeable battery 32 to the second electrical device 90, permitting operation of the second electrical device 90. Therefore, both the first and second electrical devices 80 and 90 can be operated.

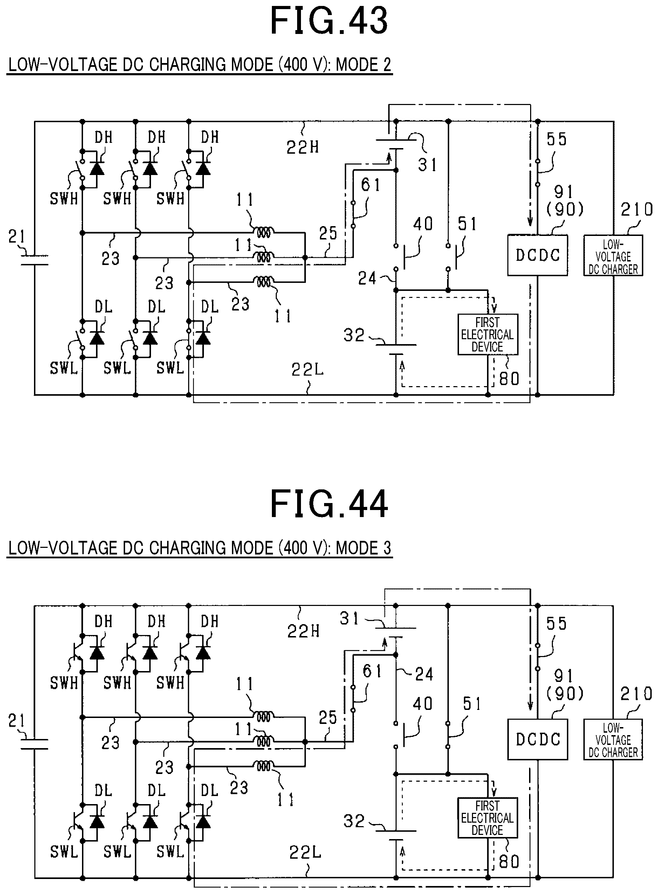

FIG. 43 illustrates the actuation status of each switch in Mode 2. In Mode 2, the controller 100 turns off the battery-to-battery switch 40, the positive-terminal-to-terminal bypass switch 51, and the upper-arm switches SWH of the inverter 20, and turns on the motor-side switch 61 and the upper-arm switch SWH for at least one phase of the inverter 20. This allows only the first rechargeable battery 31 among the first and second rechargeable batteries 31, 32 to be charged by the low-voltage direct current charger 210. In Mode 2, the second rechargeable battery 32 is not charged.

In addition, in Mode 2, the controller 100 turns on the breaker switch 55. This enables power transfer from the first rechargeable battery 31 to the second electrical device 90, permitting operation of the second electrical device 90. Therefore, both the first and second electrical devices 80 and 90 can be operated.

FIG. 13 illustrates the activation status of each switch in Mode 3. **In** Mode 3, the controller 100 turns off the battery-to-battery switch 40 and turns on the positive-terminal-to-terminal bypass switch 51 and the motor-side switch 61. **In** Mode 3, as in the first embodiment, the charging power of the first rechargeable battery 31 and the second rechargeable battery 32 can be adjusted individually based on the detection values of the first and second current sensors 73, 74 and the first and second voltage sensors 71, 72. This adjustment can be implemented by alternately turning on the upper-arm and lower-arm switches SWH and SWL for at least one phase of the inverter 20 while outputting the charging current from the low-voltage direct current charger 210, or by repeatedly turning on and off the lower-arm switch SWL for at least one phase and turning off the upper-arm switches SWH while outputting the charging current from the low-voltage direct current charger 210. Here, the charging power of the first and second rechargeable batteries 31 and 32 may be individually adjusted by adjusting the duty ratio (Ton/Tsw), which is a ratio of the on-time period Ton of the upper-arm switch SWH to one switching period Tsw for each phase. According to Mode 3, both the first and second rechargeable batteries 31, 32 can be charged.

In addition, in Mode 3, the controller 100 turns on the breaker switch 55. This enables power transfer from the first and second rechargeable batteries 31, 32 to the second electrical device 90, permitting operation of the second electrical device 90. Therefore, both the first and second electrical devices 80, 90 can be operated.

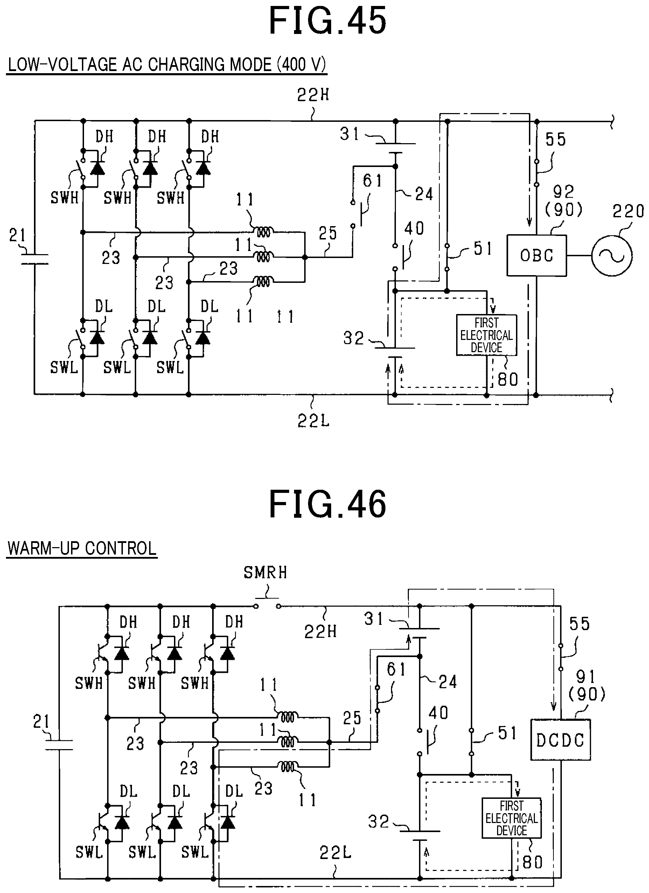

FIG. 45 illustrates the actuation status of each switch in the low-voltage alternating current charging mode. In the low-voltage alternating current charging mode, the controller 100 turns off the battery-to-battery switch 40, the motor-side switch 61, and the upper-arm and lower-arm switches SWH and SWL of the inverter 20, and turns on the positive-terminal-to-terminal bypass switch 51. This allows only the second rechargeable battery 32 among the first and second rechargeable batteries 31 and 32 to be charged by the on-board charger 92.

In addition, in the low-voltage alternating current charging mode, the controller 100 turns on the breaker switch 55. This enables power transfer from the second rechargeable battery 32 to the second electrical device 90, permitting operation of the second electrical device 90. Therefore, both the first and second electrical devices 80, 90 can be operated.

The actuation status of the battery-to-battery switch 40, the positive-terminal-to-terminal bypass switch 51, the motor-side switch 61, and the inverter 20 in the low-voltage alternating current charging mode illustrated in FIG. 45 is the actuation status corresponding to Mode 1 illustrated in FIG. 42. Besides, the above actuation status in the low-voltage alternating current charging mode may be the actuation status corresponding to Mode 2 illustrated in FIG. 12 or the actuation status corresponding to Mode 3 illustrated in FIG. 43. In the actuation status corresponding to Mode 2, only the first rechargeable battery 31 among the first and second rechargeable batteries 31 and 32 is charged by the on-board charger 92. In the actuation status corresponding to Mode 3, the controller 100 may charge both the first and second rechargeable batteries 31 and 32 using the on-board charger 92. In this case, the charging power of the first rechargeable battery 31 and the second rechargeable battery 32 may be adjusted individually by adjusting the duty ratio (Ton/Tsw), which is the ratio of the on-time period Ton of the upper-arm switch SWH to one switching period Tsw for each phase.

FIG. 46 illustrates the actuation status of each switch in the rechargeable battery warm-up mode. In the warm-up mode, the controller 100 turns off the battery-to-battery switch 40 and the high-side main switch SMRH, and turns on the positive-terminal-to-terminal bypass switch 51 and the motor-side switch 61. The controller 100 performs switching of the inverter 20 so that an alternating current charging/discharging current flows through each of the first rechargeable battery 31 and the second rechargeable battery 32 via the armature winding 11 and the inverter 20, for example, until the battery temperature Tbat reaches the target temperature Tth. This switching is performed by alternately turning on the upper-arm and lower-arm switches SWH and SWL for at least one phase. In addition, in the warm-up mode, the controller 100 turns on the breaker switch 55. This allows both the first and second electrical devices 80 and 90 to operate.

The controller 100 performs the operating state control process as in FIG. 16 described above.

The present embodiment described above can provide the similar advantages as in the first embodiment.

### <Modifications of Fifth Embodiment>

▪In a case where the controller 100 determines that a value obtained by subtracting the first detected voltage VA from the second detected voltage VB exceeds a determination threshold ΔVjde, the power consumption of the first electrical device 80 may be forcibly increased so that the difference between the first detected voltage VA and the second detected voltage VB approaches zero. This allows the voltage across the first rechargeable battery 31 and the voltage across the second rechargeable battery 32 to be equalized.
▪In order to maintain the relationship "|VA-VB| ≤ ΔVjde", the controller 100 may be configured to charge the second rechargeable battery 32 from the low-voltage rechargeable battery 110 using the first DC-DC converter 81.
▪The rated voltage of the second rechargeable battery 32 (e.g. 400 V) may be higher than the rated voltage of the first rechargeable battery 31 (e.g. 200 V). **In** this case, for example, the allowable input voltage of the first electrical device 80 may be set to the same voltage as the rated voltage of the second rechargeable battery 32, and the allowable input voltage of the second electrical device 90 may be set to the same voltage as the rated voltage of either of the first and second rechargeable batteries 31 and 32. **In** a case where the rated voltage of the first rechargeable battery 31 and the rated voltage of the second rechargeable battery 32 are different, when the controller 100 determines that the value obtained by subtracting the first detected voltage VA from the second detected voltage VB exceeds the voltage threshold Vj, the controller 100 may forcibly increase the power consumption of the first electrical device 80 so that the difference between the first detected voltage VA and the second detected voltage VB approaches a specified value.
▪The breaker switch 55 may not be provided, and the high-side terminal of the second electrical device 90 may be constantly connected to the high-side electrical path 22H.
▪The first electrical device 80 is electrically connected in parallel not with the second rechargeable battery 32 but with the first rechargeable battery 31. In this case, the operating state control process may be performed by the controller 100 in a similar manner as in the third embodiment as the modification of the first embodiment.

In the state where the motor-side switch 61 is on, if the voltage across the first rechargeable battery 31 is too high as compared to the voltage across the second rechargeable battery 32, a phenomenon may occur in which a large current flows into the second rechargeable battery 32 from the first rechargeable battery 31 via a closed circuit that includes the first rechargeable battery 31, the positive-terminal-to-terminal bypass switch 51, the lower-arm diode(s) DL connected in reverse parallel with the lower-arm switch(es) SWL, the armature winding(s) 11, and the motor-side electrical path 25.

In the case where the first electrical device 80 is electronically connected in parallel with the first rechargeable battery 31, the controller 100 may adjust the power consumption or operation frequency of the first electrical device 80 so as to maintain the relationship "|VB-VA| ≤ ΔVjde", in the similar manner as in the third embodiment.

### <Sixth Embodiment>

A sixth embodiment will now be described with reference to the accompanying drawings, focusing on differences from the fifth embodiment. In the present embodiment, as in the second embodiment, the allowable input voltage of the second electrical device 90 is higher than the allowable input voltage of the first electrical device 80, and is the same voltage (e.g. 800 V) as the sum of the voltage (e.g. rated voltage) across the first rechargeable battery 31 and the voltage (e.g. rated voltage) across the second rechargeable battery 32. That is, the second electrical device 90 has a high withstand voltage.

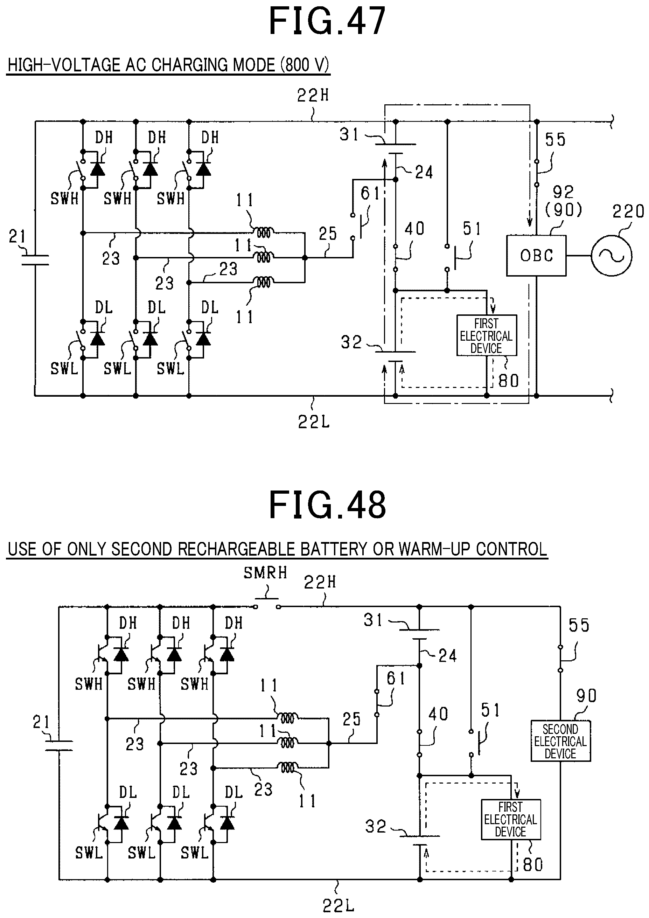

FIG. 47 illustrates the actuation status of each switch in the high-voltage alternating current charging mode. In the high-voltage alternating current charging mode, the controller 100 turns on the battery-to-battery switch 40 and turns off the positive-terminal-to-terminal bypass switch 51, the motor-side switch 61, and the upper-arm and lower-arm switches SWH and SWL of the inverter 20. This allows both the first and second rechargeable batteries 31 and 32 to be charged by the on-board charger 92. In addition, in the high-voltage alternating current charging mode, the controller 100 turns on the breaker switch 55 to permit operation of both the first electrical device 80 and the second electrical device 90.

The controller 100 performs the operating state control process illustrated previously in FIG. 18.

FIG. 48 illustrates the actuation status of each switch in the series neutral point mode. In the series neutral point mode, the controller 100 turns off the high-side main switch SMRH and turns on the breaker switch 55. In this case, when the control mode is the traveling mode, the controller 100 may permit operation of the first and second electrical devices 80 and 90, and may also perform switching of the inverter 20 with only the second rechargeable battery 32 among the first and second rechargeable batteries 31 and 32 being used as the driving power source for the motor 10. In addition, the controller 100 may also perform warm-up control of the first and second rechargeable batteries 31 and 32 by switching the inverter 20. When selecting the control mode illustrated in FIG. 48, the controller 100 may perform the process step S33 in FIG. 18.

### <Seventh Embodiment>

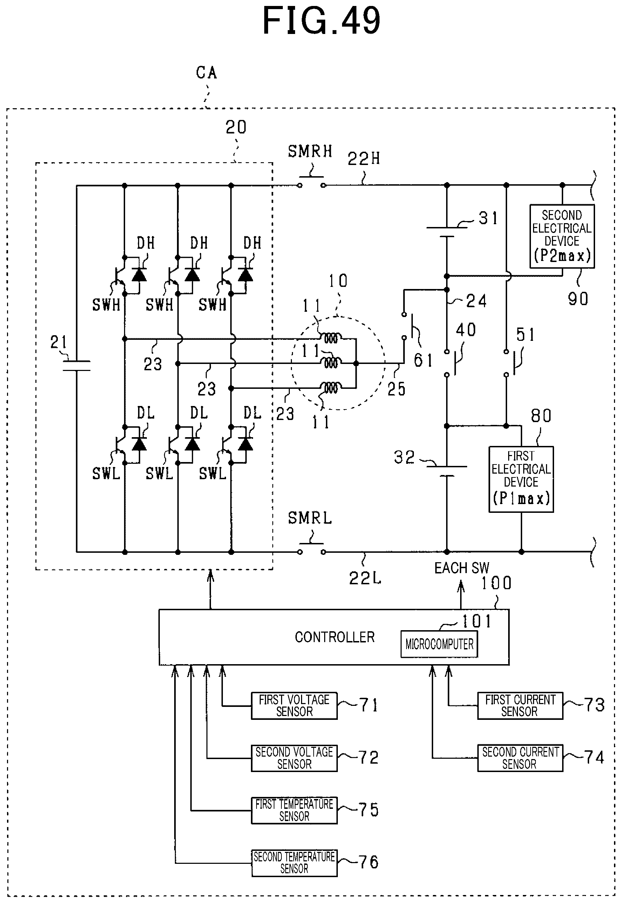

A seventh embodiment will now be described with reference to the accompanying drawings, focusing on differences from the fifth embodiment. As illustrated in FIG. 49, in the present embodiment, the second electrical device 90 is connected in parallel with the first rechargeable battery 31. The rated voltage of the second rechargeable battery 32 is set to a voltage higher than or equal to the rated voltage of the first rechargeable battery 31, specifically, a voltage higher than the rated voltage of the first rechargeable battery 31. The allowable input voltage of the second electrical device 90 is lower than the total value of the voltage (e.g., rated voltage) across the first rechargeable battery 31 and the voltage (e.g., rated voltage) across the second rechargeable battery 32 and is, for example, the same as the allowable input voltage of the first electrical device 80. In addition, the maximum power consumption P2max of the second electrical device 90 is less than the maximum power consumption P1max of the first electrical device 80.

In the present embodiment, the controller 100 performs the same process as in the fourth embodiment, including the processes in FIGS. 32 and 33.

### <Other Embodiments>

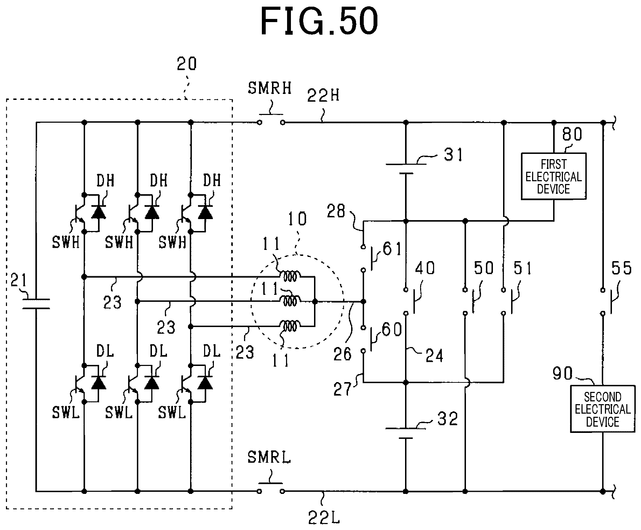

Each of the above embodiments may be modified as follows.
▪In each of the configurations illustrated in FIGS. 31 and 49, etc., the first and second electrical devices 80 and 90 may be electrically connected to the first and second rechargeable batteries 31 and 32 via a breaker switch. In each of the configurations illustrated in FIGS. 1, 20, and 31, etc., a positive-terminal-to-terminal bypass switch 51 may be further included.
▪In each of the configurations illustrated in FIGS. 34 and 49, a negative-terminal-to-terminal bypass switch 50 may be further included.
▪As illustrated in FIG. 50, in addition to the switch connecting the neutral point of the armature windings 11 and the negative terminal of the first rechargeable battery 31, a switch connecting the neutral point of the armature windings 11 and the positive terminal of the second rechargeable battery 32 may be included.

Specifically, the neutral point of the armature windings 11 is connected to a first end of a common path 26. A second end of the common path 26 is connected to a first end of a first electrical path 27, and a second end of the first electrical path 27 is connected to a portion of the battery-to-battery electrical path 24 that is on the second rechargeable battery 32 side of the battery-to-battery switch 40. In addition, the second end of the common path 26 is connected to a first end of a second electrical path 28, and a second end of the second electrical path 28 is connected to a portion of the battery-to-battery electrical path 24 that is on the first rechargeable battery 31 side of the battery-to-battery switch 40. The first electrical path 27 may be provided with the first motor-side switch 60. The second electrical path 28 may be provided with the second motor-side switch 61. There may be provided no common path 26, and the first end of each of the first electric paths 27 and second electric paths 28 may be connected to the neutral point of the armature windings 11.
▪The motor-side electric path may not be provided with a motor-side switch.
▪The connection point to which the motor-side electrical path 25 is connected may not be limited to the neutral point of the armature windings 11, but may be, for example, a middle point of one of the armature windings 11. The connection point to which the motor-side electrical path 25 is connected may be a conductive member 23. In this case, for example, using the configuration illustrated in FIG. 1 as an example, the upper-arm and lower-arm switches SWH and SWL for the phase where the motor-side electric path 25 is connected to the conductive member 23 may be turned off, and the upper-arm and lower-arm switches SWH and SWL for at least one phase other than the phase where the motor-side electric path 25 is connected to the conductive member 23 may be used for controlling each control mode.
▪A positive-terminal side connection of the high-side electrical path 22H may be provided on the opposite side from the first rechargeable battery 31 side of the inverter 20, and a negative-terminal side connection of the low-side electrical path 22L may be provided on the opposite side from the second rechargeable battery 32 side of the inverter 20.
▪The positive terminal of the first rechargeable battery 31 and the high-side electrical path 22H may be connected by a first fuse. The negative terminal of the second rechargeable battery 32 and the low-side electrical path 22L may be connected by a second fuse.
▪Each of the main switches SMRH and SMRL, the battery-to-battery switch 40, the bypass switch, and the motor-side switch may not be limited to a single switch, but may be formed of a series connection of a plurality of switches or a parallel connection of a plurality of switches.
▪Each of the switches constituting the inverter 20 may not be limited to an IGBT with a free-wheeling diode connected in anti-parallel, but may be, for example, an N-channel MOSFET with a body diode. In this case, the high-side terminal of the N-channel MOSFET acts as the drain, and the low-side terminal acts as the source.
▪The motor may not be limited to one with a star connection, but may also be one with a delta connection. The motor or the inverter may not be limited to the motor or the inverter having three phases, but may be the motor or the inverter having two phases or four phases or more. Each of the motor and the inverter may not be limited to three-phase, but may be two-phase or four-phase or more. The motor may not be limited to a permanent magnet synchronous motor that includes a permanent magnet in the rotor as a field pole, but may be a wound field synchronous motor that includes a field winding in the rotor as a field pole. In this case, the rotor may include both a field winding and a permanent magnet. In addition, the motor may not be limited to a synchronous machine, but may be an induction machine.
▪The power storage unit that is charged by the external charger may not be limited to a rechargeable battery, but may be, for example, a large-capacity electrical double-layer capacitor, or a device that is equipped with both a rechargeable battery and an electrical double-layer capacitor.
▪The mobile object to which the power conversion device is mounted may not be limited to a vehicle, but may be, for example, an aircraft or a ship. The object to which the power conversion device is mounted may not be limited to a mobile object, but may be a stationary device.
▪The control unit and the method thereof described in the present disclosure may be realized by a dedicated computer provided by configuring a processor and memory programmed to perform one or more functions embodied in a computer program. Alternatively, the control unit and the method thereof described in the present disclosure may be realized by a dedicated computer provided by configuring a processor with one or more dedicated hardware logic circuits. Alternatively, the control unit and the method thereof described in the present disclosure may be realized by one or more dedicated computers configured by a combination of a processor and memory programmed to perform one or more functions, and a processor configured with one or more hardware logic circuits. In addition, the computer program may be stored in a computer-readable, non-transitory tangible storage medium as instructions to be executed by a computer.
▪Distinctive configurations extracted from the above embodiments will now be described.

### [Configuration 1]

A power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, and a motor (10) including an armature winding (11) electrically connected to the connection point between the upper-arm switch and the lower-arm switch via a conductive member (23), the power conversion device comprising:
a storage-to-storage switch (40) provided in a storage-to-storage electric path (24) that electrically connects a negative terminal of the first power storage unit and a positive terminal of the second power storage unit;
a bypass switch (50, 51) that connects between negative terminals of the first and second storage units and/or between positive terminals of the first and second storage units;
motor-side electrical paths (25 to 28) that electrically connect the armature winding or the conductive member with the storage-to-storage electrical path;
a first electrical device (80) that is electrically connectable in parallel with a subject power storage unit, which is either the first power storage unit or the second power storage unit, or electrically connectable between the high-side electrical path and the low-side electrical path;
a second electrical device (90) that is electrically connectable to a power storage unit, among the first power storage unit and the second power storage unit, other than the power storage unit to which the first electrical device is electrically connected, between the high-side electrical path and the low-side electrical path.

### [Configuration 2]

The power conversion device according to configuration 1, wherein
the first electrical device is electrically connectable in parallel with the subject power storage unit, and
the second electrical device is electrically connectable between the high-side electrical path and the low-side electrical path.

### [Configuration 3]

The power conversion device according to configuration 2, further comprising:
a high-side main switch (SMRH) that electrically connects or disconnects between the high-side terminal of the upper-arm switch and the positive-terminal of the first power storage unit;
a low-side main switch (SMRL) that electrically connects or disconnects between the low-side terminal of the lower-arm switch and the negative-terminal of the second energy storage unit, and
a control unit (100) that inhibits operation of the second electrical device and permits operation of the first electrical device, in a state where the storage-to-storage switch, the high-side main switch, and the low-side main switch are on, wherein
an allowable input voltage of each of the first electrical device and the second electrical device is lower than a sum of a voltage of the first power storage unit and a voltage of the second power storage unit.

### [Configuration 4]

The power conversion device according to configuration 2, further comprising:
a control unit (100) that permits operation of at least one of the first electrical device and the second electrical device, in a state where the storage-to-storage switch is off, wherein
an allowable input voltage of each of the first electrical device and the second electrical device is lower than a sum of a voltage of the first power storage unit and a voltage of the second power storage unit.

### [Configuration 5]

The power conversion device according to configuration 2, further comprising:
a control unit (100) that permits operation of at least one of the first electrical device and the second electrical device, in a state where the armature winding is energizable from only one of the first power storage unit and the second power storage unit, wherein
an allowable input voltage of each of the first electrical device and the second electrical device is lower than a sum of a voltage of the first power storage unit and a voltage of the second power storage unit.

### [Configuration 6]

The power conversion device according to any one of configurations 3 to 5, wherein
the allowable input voltage of the first electrical device and the allowable input voltage of the second electrical device are equal.

### [Configuration 7]

The power conversion device according to any one of configurations 3 to 6, wherein
a voltage of the subject power storage unit is higher than or equal to a voltage of a power storage unit, among the first power storage unit and the second power storage unit, other than the subject power storage unit.

### [Configuration 8]

The power conversion device according to configuration 4 or 5, wherein
at least one of the first electrical device and the second electrical device includes a DC-DC converter (81, 91), and
the DC-DC converter steps down an input voltage and supplies it to the control unit.

### [Configuration 9]

The power conversion device according to configuration 2, wherein
an allowable input voltage of the second electrical device is higher than an allowable input voltage of the first electrical device.

### [Configuration 10]

The power conversion device according to configuration 9, wherein
the allowable input voltage of the second electrical device is equal to a sum of a voltage of the first power storage unit and a voltage of the second power storage unit.

### [Configuration 11]

The power conversion device according to configuration 9 or 10, further comprising a control unit (100) that permits operation of the second electrical device, provided that the storage-to-storage switch is on.

### [Configuration 12]

The power conversion device according to configuration 11, wherein
the second electrical device includes an internal charger (92) that converts an alternating current voltage output from an external alternating current power source (220) into a direct current voltage and supplies it to the first power storage unit and the second power storage unit, and
the control unit turns on the storage-to-storage switch when charging with the internal charger.

### [Configuration 13]

13. The power conversion device according to any one of configurations 2 to 12, wherein
the bypass switch is a negative-terminal-to-terminal bypass switch (50) that electrically connects a negative terminal of the first power storage unit and a negative terminal of the second power storage unit,
the motor-side electrical path is a path (25 to 27) that electrically connects the armature winding and a portion of the storage-to-storage electrical path on the second power storage unit side of the storage-to-storage switch, and
the subject power storage unit is the first power storage unit.

### [Configuration 14]

The power conversion device according to any one of configurations 2 to 12, wherein
the bypass switch is a positive-terminal-to-terminal bypass switch (51) that electrically connects a positive terminal of the first power storage unit and a positive terminal of the second power storage unit,
the motor-side electrical path is a path (25, 26, 28) that electrically connects the armature winding and a portion of the storage-to-storage electrical path on the first power storage unit side of the storage-to-storage switch, and
the subject power storage unit is the first power storage unit.

### [Configuration 15]

The power conversion device according to configuration 1, wherein
the bypass switch is a negative-terminal-to-terminal bypass switch (50) that electrically connects a negative terminal of the first power storage unit and a negative terminal of the second power storage unit,
the motor-side electrical path is a path (25 to 27) that electrically connects the armature winding and a portion of the storage-to-storage electrical path on the second power storage unit side of the storage-to-storage switch,
the first electrical device is electrically connectable in parallel with the first power storage unit or electrically connectable between the high-side electrical path and the low-side electrical path,
the first electrical device is electrically connectable in parallel with the second power storage unit that is the subject power storage unit, and
the voltage of the first power storage unit is higher than or equal to the voltage of the second power storage unit.

### [Configuration 16]

The power conversion device according to configuration 1, wherein
the bypass switch is a positive-terminal-to-terminal bypass switch (51) that electrically connects a positive terminal of the first power storage unit and a positive terminal of the second power storage unit,
the motor-side electrical path is a path (25, 26, 28) that electrically connects the armature winding and a portion of the storage-to-storage electrical path on the first power storage unit side of the storage-to-storage switch,
the first electrical device is electrically connectable in parallel with the second power storage unit or electrically connectable between the high-side electrical path and the low-side electrical path,
the second electrical device is electrically connectable in parallel with the first power storage unit that is the subject power storage unit, and
a voltage of the second power storage unit is higher than or equal to a voltage of the first power storage unit.

### [Configuration 17]

The power conversion device according to configuration 15 or 16, wherein
a maximum power consumption of the second electrical device is less than a maximum power consumption of the first electrical device.

### [Configuration 18]

The power conversion device according to configuration 15 or 16, further comprising
a control unit (100) that permits operation of the second electrical device and inhibits operation of the first electrical device when the power conversion device is in a sleep state.

### [Configuration 19]

The power conversion device according to configuration 17 or 18, wherein
the second electrical device includes a DC-DC converter (91), and
the DC-DC converter of the second electrical device steps down a voltage of the subject power storage unit and supplies it to the control unit.

### [Configuration 20]

The power conversion device according to configuration 15 or 16, further comprising
a control unit (100) that makes a power consumption of the second electrical device greater than a power consumption of the first electrical device.

### [Configuration 21]

The power conversion device according to configuration 20, wherein
the control unit makes a power consumption of the second electrical device greater than a power consumption of the first electrical device such that a voltage of the subject power storage unit becomes greater than or equal to a voltage of a power storage unit, among the first power storage unit and the second power storage unit, other than the subject power storage unit.

### [Configuration 22]

The power conversion device according to configuration 15 or 16, further comprising
a control unit (100) that makes an operation frequency of the second electrical device higher than an operation frequency of the first electrical device.

### [Configuration 23]

The power conversion device according to configuration 22, wherein
the control unit makes an operation frequency of the second electrical device greater than an operation frequency of the first electrical device such that a voltage of the subject power storage unit becomes greater than or equal to a voltage of a power storage unit, among the first power storage unit and the second power storage unit, other than the subject power storage unit.

### [Configuration 24]

The power conversion device according to configuration 15 or 16, wherein
the first electrical device comprises a charger (81) that is an electrical device capable of supplying power to a power storage unit other than the subject power storage unit among the first power storage unit and the second power storage unit, and
the second electrical device comprises a discharger (91) that is an electrical device capable of consuming power of the subject power storage unit.

### [Configuration 25]

A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a bypass switch (50, 51) that connects between negative terminals of the first and second storage units and/or between positive terminals of the first and second storage units;
a high-side main switch (SMRH) that electrically connects or disconnects between the high-side terminal of the upper-arm switch and the positive-terminal of the first power storage unit;
a low-side main switch (SMRL) that electrically connects or disconnects between the low-side terminal of the lower-arm switch and the negative-terminal of the second energy storage unit;
motor-side electrical paths (25 to 28) that electrically connect the armature winding or the conductive member with the storage-to-storage electrical path;
a first electrical device (80) that is electrically connectable in parallel with a subject power storage unit, which is either the first power storage unit or the second power storage unit; and
a second electrical device (90) that is electrically connectable between the high-side electrical path and the low-side electrical path, wherein
an allowable input voltage of each of the first electrical device and the second electrical device is lower than a sum of a voltage of the first power storage unit and a voltage of the second power storage unit, and
the program causes the computer to inhibit operation of the second electrical device and permit operation of the first electrical device, in a state where the storage-to-storage switch, the high-side main switch, and the low-side main switch are on.

### [Configuration 26]

A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a bypass switch (50, 51) that connects between negative terminals of the first and second storage units and/or between positive terminals of the first and second storage units;
motor-side electrical paths (25 to 28) that electrically connect the armature winding or the conductive member with the storage-to-storage electrical path;
a first electrical device (80) that is electrically connectable in parallel with a subject power storage unit, which is either the first power storage unit or the second power storage unit; and
a second electrical device (90) that is electrically connectable between the high-side electrical path and the low-side electrical path, wherein
an allowable input voltage of each of the first electrical device and the second electrical device is lower than a sum of a voltage of the first power storage unit and a voltage of the second power storage unit, and
the program causes the computer to permit operation of at least one of the first electrical device and the second electrical device, in a state where the storage-to-storage switch is off.

### [Configuration 27]

A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, and a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a bypass switch (50, 51) that connects between negative terminals of the first and second storage units and/or between positive terminals of the first and second storage units;
motor-side electrical paths (25 to 28) that electrically connect the armature winding or the conductive member with the storage-to-storage electrical path;
a first electrical device (80) that is electrically connectable in parallel with a subject power storage unit, which is either the first power storage unit or the second power storage unit;
a second electrical device (90) that is electrically connectable between the high-side electrical path and the low-side electrical path, wherein
an allowable input voltage of each of the first electrical device and the second electrical device is lower than a sum of a voltage of the first power storage unit and a voltage of the second power storage unit, and
the program causes the computer to permit operation of at least one of the first electrical device and the second electrical device, in a state where the armature winding is energizable from only one of the first power storage unit and the second power storage unit.

### [Configuration 28]

A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, and a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a bypass switch (50, 51) that connects between negative terminals of the first and second storage units and/or between positive terminals of the first and second storage units;
motor-side electrical paths (25 to 28) that electrically connect the armature winding or the conductive member with the storage-to-storage electrical path;
a first electrical device (80) that is electrically connectable in parallel with a subject power storage unit, which is either the first power storage unit or the second power storage unit;
a second electrical device (90) that is electrically connectable between the high-side electrical path and the low-side electrical path, wherein
an allowable input voltage of each of the first electrical device and the second electrical device is lower than a sum of a voltage of the first power storage unit and a voltage of the second power storage unit,
an allowable input voltage of the second electrical device is higher than an allowable input voltage of the first electrical device, and
the program causes the computer to permit operation of the second electrical device, provided that the storage-to-storage switch is on.

### [Configuration 29]

A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, and a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a negative-terminal-to-terminal bypass switch (50) that electrically connects a negative terminal of the first power storage unit and a negative terminal of the second power storage unit;
motor-side electrical path (25 to 27) that electrically connects the armature winding and a portion of the storage-to-storage electrical path on the second power storage unit side of the storage-to-storage switch;
a first electrical device (80) that is electrically connectable in parallel with the first power storage unit or electrically connectable between the high-side electrical path and the low-side electrical path; and
a second electrical device (90) that is electrically connectable to the second power storage unit, wherein
the voltage of the first power storage unit is higher than or equal to the voltage of the second power storage unit, and
the program causes the computer to, when the power conversion device is in a sleep state:
   permit operation of the second electrical device and inhibit operation of the first electrical device;
   make a power consumption of the second electrical device greater than a power consumption of the first electrical device; or
   make an operation frequency of the second electrical device higher than an operation frequency of the first electrical device.

### [Configuration 30]

A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, and a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a positive-terminal-to-terminal bypass switch (51) that electrically connects a positive terminal of the first power storage unit and a positive terminal of the second power storage unit;
a motor-side electrical path (25, 26, 28) that electrically connects the armature winding and a portion of the storage-to-storage electrical path on the first power storage unit side of the storage-to-storage switch;
a first electrical device (80) that is electrically connectable in parallel with the second power storage unit or electrically connectable between the high-side electrical path and the low-side electrical path; and
a second electrical device (90) that is electrically connectable to the first power storage unit, wherein
the voltage of the second power storage unit is higher than or equal to the voltage of the first power storage unit,
the program causes the computer to, when the power conversion device is in a sleep state:
   permit operation of the second electrical device and inhibit operation of the first electrical device;
   make a power consumption of the second electrical device greater than a power consumption of the first electrical device; or
   make an operation frequency of the second electrical device higher than an operation frequency of the first electrical device.

Although the present disclosure has been described in accordance with the above-described embodiments, it is not limited to such embodiments, but also encompasses various variations and variations within equal scope. **In** addition, various combinations and forms, as well as other combinations and forms, including only one element, more or less, are also within the scope and idea of the present disclosure.

## Claims

1. A power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, and a motor (10) including an armature winding (11) electrically connected to the connection point between the upper-arm switch and the lower-arm switch via a conductive member (23), the power conversion device comprising:
a storage-to-storage switch (40) provided in a storage-to-storage electric path (24) that electrically connects a negative terminal of the first power storage unit and a positive terminal of the second power storage unit;
a bypass switch (50, 51) that connects between negative terminals of the first and second storage units and/or between positive terminals of the first and second storage units;
motor-side electrical paths (25 to 28) that electrically connect the armature winding or the conductive member with the storage-to-storage electrical path;
a first electrical device (80) that is electrically connectable in parallel with a subject power storage unit, which is either the first power storage unit or the second power storage unit, or electrically connectable between the high-side electrical path and the low-side electrical path;
a second electrical device (90) that is electrically connectable to a power storage unit, among the first power storage unit and the second power storage unit, other than the power storage unit to which the first electrical device is electrically connected, between the high-side electrical path and the low-side electrical path.

2. The power conversion device according to claim 1, wherein
the first electrical device is electrically connectable in parallel with the subject power storage unit, and
the second electrical device is electrically connectable between the high-side electrical path and the low-side electrical path.

3. The power conversion device according to claim 2, further comprising:
a high-side main switch (SMRH) that electrically connects or disconnects between the high-side terminal of the upper-arm switch and the positive-terminal of the first power storage unit;
a low-side main switch (SMRL) that electrically connects or disconnects between the low-side terminal of the lower-arm switch and the negative-terminal of the second energy storage unit, and
a control unit (100) that inhibits operation of the second electrical device and permits operation of the first electrical device, in a state where the storage-to-storage switch, the high-side main switch, and the low-side main switch are on, wherein
an allowable input voltage of each of the first electrical device and the second electrical device is lower than a sum of a voltage of the first power storage unit and a voltage of the second power storage unit.

4. The power conversion device according to claim 2, further comprising:
a control unit (100) that permits operation of at least one of the first electrical device and the second electrical device, in a state where the storage-to-storage switch is off, wherein
an allowable input voltage of each of the first electrical device and the second electrical device is lower than a sum of a voltage of the first power storage unit and a voltage of the second power storage unit.

5. The power conversion device according to claim 2, further comprising:
a control unit (100) that permits operation of at least one of the first electrical device and the second electrical device, in a state where the armature winding is energizable from only one of the first power storage unit and the second power storage unit, wherein
an allowable input voltage of each of the first electrical device and the second electrical device is lower than a sum of a voltage of the first power storage unit and a voltage of the second power storage unit.

6. The power conversion device according to any one of claims 3 to 5, wherein
the allowable input voltage of the first electrical device and the allowable input voltage of the second electrical device are equal.

7. The power conversion device according to claim 3, wherein
a voltage of the subject power storage unit is higher than or equal to a voltage of a power storage unit, among the first power storage unit and the second power storage unit, other than the subject power storage unit.

8. The power conversion device according to claim 4 or 5, wherein
at least one of the first electrical device and the second electrical device includes a DC-DC converter (81, 91), and
the DC-DC converter steps down an input voltage and supplies it to the control unit.

9. The power conversion device according to claim 2, wherein
an allowable input voltage of the second electrical device is higher than an allowable input voltage of the first electrical device.

10. The power conversion device according to claim 9, wherein
the allowable input voltage of the second electrical device is equal to a sum of a voltage of the first power storage unit and a voltage of the second power storage unit.

11. The power conversion device according to claim 9 or 10, further comprising a control unit (100) that permits operation of the second electrical device, provided that the storage-to-storage switch is on.

12. The power conversion device according to claim 11, wherein
the second electrical device includes an internal charger (92) that converts an alternating current voltage output from an external alternating current power source (220) into a direct current voltage and supplies it to the first power storage unit and the second power storage unit, and
the control unit turns on the storage-to-storage switch when charging with the internal charger.

13. The power conversion device according to claim 2, wherein
the bypass switch is a negative-terminal-to-terminal bypass switch (50) that electrically connects a negative terminal of the first power storage unit and a negative terminal of the second power storage unit,
the motor-side electrical path is a path (25 to 27) that electrically connects the armature winding and a portion of the storage-to-storage electrical path on the second power storage unit side of the storage-to-storage switch, and
the subject power storage unit is the first power storage unit.

14. The power conversion device according to claim 2, wherein
the bypass switch is a positive-terminal-to-terminal bypass switch (51) that electrically connects a positive terminal of the first power storage unit and a positive terminal of the second power storage unit,
the motor-side electrical path is a path (25, 26, 28) that electrically connects the armature winding and a portion of the storage-to-storage electrical path on the first power storage unit side of the storage-to-storage switch, and
the subject power storage unit is the first power storage unit.

15. The power conversion device according to claim 1, wherein
the bypass switch is a negative-terminal-to-terminal bypass switch (50) that electrically connects a negative terminal of the first power storage unit and a negative terminal of the second power storage unit,
the motor-side electrical path is a path (25 to 27) that electrically connects the armature winding and a portion of the storage-to-storage electrical path on the second power storage unit side of the storage-to-storage switch,
the first electrical device is electrically connectable in parallel with the first power storage unit or electrically connectable between the high-side electrical path and the low-side electrical path,
the first electrical device is electrically connectable in parallel with the second power storage unit that is the subject power storage unit, and
the voltage of the first power storage unit is higher than or equal to the voltage of the second power storage unit.

16. The power conversion device according to claim 1, wherein
the bypass switch is a positive-terminal-to-terminal bypass switch (51) that electrically connects a positive terminal of the first power storage unit and a positive terminal of the second power storage unit,
the motor-side electrical path is a path (25, 26, 28) that electrically connects the armature winding and a portion of the storage-to-storage electrical path on the first power storage unit side of the storage-to-storage switch,
the first electrical device is electrically connectable in parallel with the second power storage unit or electrically connectable between the high-side electrical path and the low-side electrical path,
the second electrical device is electrically connectable in parallel with the first power storage unit that is the subject power storage unit, and
a voltage of the second power storage unit is higher than or equal to a voltage of the first power storage unit.

17. The power conversion device according to claim 15 or 16, wherein
a maximum power consumption of the second electrical device is less than a maximum power consumption of the first electrical device.

18. The power conversion device according to claim 15 or 16, further comprising
a control unit (100) that permits operation of the second electrical device and inhibits operation of the first electrical device when the power conversion device is in a sleep state.

19. The power conversion device according to claim 17, wherein
the second electrical device includes a DC-DC converter (91), and
the DC-DC converter of the second electrical device steps down a voltage of the subject power storage unit and supplies it to the control unit.

20. The power conversion device according to claim 18, wherein
the second electrical device includes a DC-DC converter (91), and
the DC-DC converter of the second electrical device steps down a voltage of the subject power storage unit and supplies it to the control unit.

21. The power conversion device according to claim 15 or 16, further comprising
a control unit (100) that makes a power consumption of the second electrical device greater than a power consumption of the first electrical device.

22. The power conversion device according to claim 20, wherein
the control unit makes a power consumption of the second electrical device greater than a power consumption of the first electrical device such that a voltage of the subject power storage unit becomes greater than or equal to a voltage of a power storage unit, among the first power storage unit and the second power storage unit, other than the subject power storage unit.

23. The power conversion device according to claim 15 or 16, further comprising
a control unit (100) that makes an operation frequency of the second electrical device higher than an operation frequency of the first electrical device.

24. The power conversion device according to claim 22, wherein
the control unit makes an operation frequency of the second electrical device greater than an operation frequency of the first electrical device such that a voltage of the subject power storage unit becomes greater than or equal to a voltage of a power storage unit, among the first power storage unit and the second power storage unit, other than the subject power storage unit.

25. The power conversion device according to claim 15 or 16, wherein
the first electrical device comprises a charger (81) that is an electrical device capable of supplying power to a power storage unit other than the subject power storage unit among the first power storage unit and the second power storage unit, and
the second electrical device comprises a discharger (91) that is an electrical device capable of consuming power of the subject power storage unit.

26. A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a bypass switch (50, 51) that connects between negative terminals of the first and second storage units and/or between positive terminals of the first and second storage units;
a high-side main switch (SMRH) that electrically connects or disconnects between the high-side terminal of the upper-arm switch and the positive-terminal of the first power storage unit;
a low-side main switch (SMRL) that electrically connects or disconnects between the low-side terminal of the lower-arm switch and the negative-terminal of the second energy storage unit;
motor-side electrical paths (25 to 28) that electrically connect the armature winding or the conductive member with the storage-to-storage electrical path;
a first electrical device (80) that is electrically connectable in parallel with a subject power storage unit, which is either the first power storage unit or the second power storage unit; and
a second electrical device (90) that is electrically connectable between the high-side electrical path and the low-side electrical path, wherein
an allowable input voltage of each of the first electrical device and the second electrical device is lower than a sum of a voltage of the first power storage unit and a voltage of the second power storage unit, and
the program causes the computer to inhibit operation of the second electrical device and permit operation of the first electrical device, in a state where the storage-to-storage switch, the high-side main switch, and the low-side main switch are on.

27. A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a bypass switch (50, 51) that connects between negative terminals of the first and second storage units and/or between positive terminals of the first and second storage units;
motor-side electrical paths (25 to 28) that electrically connect the armature winding or the conductive member with the storage-to-storage electrical path;
a first electrical device (80) that is electrically connectable in parallel with a subject power storage unit, which is either the first power storage unit or the second power storage unit; and
a second electrical device (90) that is electrically connectable between the high-side electrical path and the low-side electrical path, wherein
an allowable input voltage of each of the first electrical device and the second electrical device is lower than a sum of a voltage of the first power storage unit and a voltage of the second power storage unit, and
the program causes the computer to permit operation of at least one of the first electrical device and the second electrical device, in a state where the storage-to-storage switch is off.

28. A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, and a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a bypass switch (50, 51) that connects between negative terminals of the first and second storage units and/or between positive terminals of the first and second storage units;
motor-side electrical paths (25 to 28) that electrically connect the armature winding or the conductive member with the storage-to-storage electrical path;
a first electrical device (80) that is electrically connectable in parallel with a subject power storage unit, which is either the first power storage unit or the second power storage unit;
a second electrical device (90) that is electrically connectable between the high-side electrical path and the low-side electrical path, wherein
an allowable input voltage of each of the first electrical device and the second electrical device is lower than a sum of a voltage of the first power storage unit and a voltage of the second power storage unit, and
the program causes the computer to permit operation of at least one of the first electrical device and the second electrical device, in a state where the armature winding is energizable from only one of the first power storage unit and the second power storage unit.

29. A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, and a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a bypass switch (50, 51) that connects between negative terminals of the first and second storage units and/or between positive terminals of the first and second storage units;
motor-side electrical paths (25 to 28) that electrically connect the armature winding or the conductive member with the storage-to-storage electrical path;
a first electrical device (80) that is electrically connectable in parallel with a subject power storage unit, which is either the first power storage unit or the second power storage unit;
a second electrical device (90) that is electrically connectable between the high-side electrical path and the low-side electrical path, wherein
an allowable input voltage of each of the first electrical device and the second electrical device is lower than a sum of a voltage of the first power storage unit and a voltage of the second power storage unit,
an allowable input voltage of the second electrical device is higher than an allowable input voltage of the first electrical device, and
the program causes the computer to permit operation of the second electrical device, provided that the storage-to-storage switch is on.

30. A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, and a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a negative-terminal-to-terminal bypass switch (50) that electrically connects a negative terminal of the first power storage unit and a negative terminal of the second power storage unit;
motor-side electrical path (25 to 27) that electrically connects the armature winding and a portion of the storage-to-storage electrical path on the second power storage unit side of the storage-to-storage switch;
a first electrical device (80) that is electrically connectable in parallel with the first power storage unit or electrically connectable between the high-side electrical path and the low-side electrical path; and
a second electrical device (90) that is electrically connectable to the second power storage unit, wherein
the voltage of the first power storage unit is higher than or equal to the voltage of the second power storage unit, and
the program causes the computer to, when the power conversion device is in a sleep state:
permit operation of the second electrical device and inhibit operation of the first electrical device;
make a power consumption of the second electrical device greater than a power consumption of the first electrical device; or
make an operation frequency of the second electrical device higher than an operation frequency of the first electrical device.

31. A program for application to a power conversion device equipped with a high-side electrical path (22H) that is electrically connectable to a positive terminal of a first power storage unit (31), and a low-side electrical path (22L) that is electrically connectable to a negative terminal of a second power storage unit (32), an inverter (20) including an upper-arm switch (SWH) electrically connected to the high-side electrical path and a lower-arm switch (SWL) electrically connected to the low-side electrical path, and a motor (10) including an armature winding (11) electrically connected to the connection point between the upper-arm switch and the lower-arm switch via a conductive member (23), and a computer (101), the power conversion device comprising:
a storage-to-storage switch (40) provided in a storage-to-storage electric path (24) that electrically connects a negative terminal of the first power storage unit and a positive terminal of the second power storage unit;
a positive-terminal-to-terminal bypass switch (51) that electrically connects a positive terminal of the first power storage unit and a positive terminal of the second power storage unit;
a motor-side electrical path (25, 26, 28) that electrically connects the armature winding and a portion of the storage-to-storage electrical path on the first power storage unit side of the storage-to-storage switch;
a first electrical device (80) that is electrically connectable in parallel with the second power storage unit or electrically connectable between the high-side electrical path and the low-side electrical path; and
a second electrical device (90) that is electrically connectable to the first power storage unit, wherein
the voltage of the second power storage unit is higher than or equal to the voltage of the first power storage unit,
the program causes the computer to, when the power conversion device is in a sleep state:
permit operation of the second electrical device and inhibit operation of the first electrical device;
make a power consumption of the second electrical device greater than a power consumption of the first electrical device; or
make an operation frequency of the second electrical device higher than an operation frequency of the first electrical device.
